# EUROPÄISCHE PATENTSCHRIFT

(11) **EP 3 935 489 B1**
(45) Veröffentlichungstag und Bekanntmachung des Hinweises auf die Patenterteilung: **25.11.2026**
(21) Anmeldenummer: 20706972.5
(22) Anmeldetag: 12.02.2020
(51) Int. Cl.: G06F 8/53, G06F 9/455, G06F 8/41

(54) **VERFAHREN ZUM ERZEUGEN EINER DARSTELLUNG EINER PROGRAMMLOGIK, DEKOMPILIERVORRICHTUNG, REKOMPILIERSYSTEM UND COMPUTERPROGRAMMPRODUKT**
METHOD FOR GENERATING A REPRESENTATION OF A PROGRAM LOGIC, DECOMPILING DEVICE, RECOMPILING SYSTEM, AND COMPUTER PROGRAM PRODUCT
PROCÉDÉ POUR GÉNÉRER UNE REPRÉSENTATION D'UNE LOGIQUE DE PROGRAMME, DISPOSITIF DE DÉCOMPILATION, SYSTÈME DE RECOMPILATION ET PRODUIT DE PROGRAMME INFORMATIQUE

(30) Priorität: 04.03.2019 DE 102019105418
(43) Veröffentlichungstag der Anmeldung: 12.01.2022
(73) Patentinhaber: Fujitsu Germany GmbH, 80807 München (DE)
(72) Erfinder: KASPER, Dieter, 80807 München (DE); MAYER, Raimund, 81541 München (DE)
(74) Vertreter: Epping - Hermann - Fischer
(86) Internationale Anmeldenummer: PCT/EP2020/053637
(87) Internationale Veröffentlichungsnummer: WO 2020/177994

(56) Entgegenhaltungen:
- CN-A- 107 908 955
- US-A- 5 860 008

## Beschreibung

Die Erfindung betrifft ein Verfahren zum Erzeugen einer Darstellung einer Programmlogik in einer Zwischensprache basierend auf erstem Programmcode in einer niedrigen Programmiersprache für eine erste Prozessorarchitektur. Des Weiteren betrifft die Erfindung eine Vorrichtung zum Dekompilieren von erstem Programmcode für einen Prozessor einer ersten Prozessorarchitektur, ein Rekompiliersystem zum Übersetzen von ersten Programmcode einer ersten Prozessorarchitektur in ausführbaren Programmcode für eine zweite Prozessorarchitektur und Computerprogrammprodukte.

Von den späten 1950er bis Ende der 1980er Jahre wurde eine Vielzahl von sogenannten Mainframe-Computern mit zugehörigen Prozessorarchitekturen entwickelt. Wegen der relativ hohen Kosten deren Hardware wurden solche Computersysteme in der Regel zentral in einem Rechenzentrum verwaltet. Dabei teilten sich unterschiedliche Computerprogramme zur Ausführung verschiedener Anwendungen die Ressourcen desselben Computersystems.

Mit der zunehmenden Miniaturisierung und der damit einhergehenden Kostenreduzierung bei der Herstellung von Computersystemen sowie weiteren technischen Fortschritten, insbesondere bei der Virtualisierung von Computersystemen und deren Ressourcen, hat sich der damalige, zentralistische Ansatz der Mainframe-Architektur weitgehend überholt. Dennoch wird eine relativ große Anzahl von spezialisierten Computerprogrammen weiter eingesetzt, insbesondere in den Bereichen der Buchhaltung, Steuerverwaltung und komplexer Steuerungssysteme, die ursprünglich zur Ausführung auf einem derartigen Mainframe-System entwickelt wurden.

In etlichen Fällen liegt der ursprüngliche Quellcode (englisch: "source code") des jeweiligen Computerprogramms nicht mehr vor oder kann zumindest nicht mit vertretbarem Aufwand ermittelt werden. Derartige Computerprogramme werden entweder auf noch funktionsfähigen oder nachgebauten Mainframe-Systemen mit der Ursprungsarchitektur ausgeführt oder zunehmend unter Verwendung von Virtualisierungssystemen auf einem virtuellen System ausgeführt, das die Architektur eines solchen Mainframe-Systems emuliert.

Eine relativ weit verbreitete Mainframe-Computerarchitektur basiert auf dem IBM-System/360 (S/360), dem IBM-System/370 (S/370) beziehungsweise dem IBM-System/390 (S/390). Für diese Prozessorarchitekturen existiert eine Vielzahl von Programmen. Diese werden heutzutage typischerweise auf Computersystemen mit Prozessoren der sogenannten x86-Architektur der Firma Intel ausgeführt. Um die Unterschiede zwischen den zwei Prozessorarchitekturen auszugleichen, wird dabei typischerweise der Betrieb eines S/360-, S/370-beziehungsweise S/390-System mit einem zugehörigen Prozessor auf einem Prozessor mit einer x86-Architektur emuliert.

Dabei führt ein Emulator ein Computerprogramms, das beispielsweise als sogenannter S/390-Binärcode (englisch: "binary") vorliegt, dadurch aus, in dem er jeden einzelnen Maschinenbefehl des S/390-Binärcodes interpretiert. Eine derartige Interpretation ist konzeptionell relativ leicht zu implementieren, da sie unabhängig von einer dem Computerprogramm zu Grunde liegenden Programmlogik ist und lediglich eine Analyse der Semantik der Maschinenbefehle einer Ursprungs- oder Quellplattform (englisch: "source platform") erfordert. Hierzu werden beispielsweise Register und Speicheradressen der S/390-Architektur auf Register und Speicheradressen der x86-Architektur oder einer anderen Zielplattform (englisch: "target platform") abgebildet.

Wegen der Interpretation des S/390-Binärcodes zur Laufzeit sowie den Unterschieden der zugrundeliegenden CISC-Prozessorarchitekturen ergeben sich dabei erhebliche Effizienzverluste. Insbesondere kommt es zu einem so genannten "Pumping" oder Aufblähen des Maschinencodes, beispielsweise weil die verwendete Byte-Reihenfolge von codierten Zahlenwerten von Big- auf Little-Indian konvertiert werden muss, die Registerbreite der vorhandenen Register sich unterscheiden, einzelne Bits bei Speicherzugriffen maskiert werden müssen, Ergebnisse von Bedingungen zwischengespeichert und zusätzliche Register in einen Bereich des Hauptspeichers abgebildet und von dort wieder geladen werden müssen. Dieser Zusatzaufwand entstammt nicht der Semantik des ursprünglichen Computerprogramms in der Hochsprache, sondern allein seiner ursprünglichen technischen Umsetzung auf der Quellplattform. Die technischen Ursachen dieser Effizienzverluste sind äußert komplex und daher auch nicht im Allgemeinen zu vermeiden.

Im Ergebnis erfordert die Interpretation des S/390-Binärcodes auf der Zielplattform typischerweise deutlich mehr Prozessorzyklen als die Ausführung des S/390-Binärcodes auf der Quellplattform. Außerdem ist es auf diesem Wege nicht möglich, das Computerprogramm zu erweitern oder zu pflegen, beispielsweise um bekannte Fehler (englisch: "bugs") zu beseitigen.

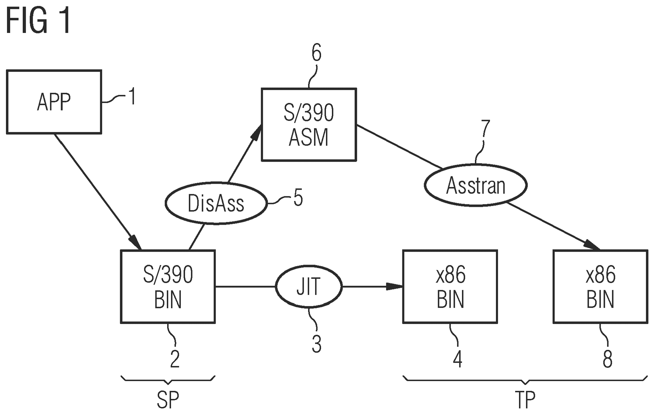

Figur 1 zeigt zwei verbesserte Ansätze zum Ausführen eines Computerprogramms 1, das als S/390-Binärcode 2 vorliegt.

Beim ersten verbesserten Ansatz übersetzt ein so genannter Just-In-Time (JIT) Übersetzer 3 Maschinenbefehle des S/390-Binärcodes 2 zur Laufzeit in eine entsprechende Sequenz von Maschinenbefehlen einer Zielplattform TP und speichert die übersetzte Sequenz als ersten x86-Binärcode 4 zwischen. Wird derselbe Maschinenbefehl des S/390 Binärcodes 2 erneut ausgeführt, erfolgt in der Regel keine erneute Übersetzung. Stattdessen wird der korrespondierende Teil des zwischengespeicherten, ersten x86-Binärcode 4 erneut ausgeführt, was den Aufwand für die Übersetzung erheblich reduziert und die Ausführung des Computerprogramms 1 beschleunigt.

Jedoch besteht auch hier das Problem des Pumpings, so dass zur Ausführung des ersten x86-Binärcodes 4 auf der Zielplattform TP typsicherweise deutlich mehr Prozessorzyklen erforderlich sind als zur Ausführung des S/390-Binärcodes 2 auf der Quellplattform SP. Außerdem ist dieser Ansatz nur bei Computerprogrammen 1 anwendbar, die etliche Randbedingungen einhalten. Solche Computerprogramme 1 werden als gutartig oder mit dem englischen Ausdruck "well behaving" bezeichnet. Beispielsweise muss der x86-Binärcodes 4 verworfen werden, wenn eine Operation erkannt wird, die zu einer Modifikation des S/390-Binärcodes 2 führen könnte. Insgesamt müssen circa 30 Bedingungen durch den JIT-Übersetzer 3 überwacht werden, um eine gefahrlose Ausführung des zwischengespeicherten x86-Binärcodes 4 sicherzustellen. Wird eine dieser Bedingungen verletzt, wird der zwischengespeicherte x86-Binärcode 4 verworfen und der ursprüngliche S/390-Binärcode 2 wie oben beschrieben neu interpretiert. Das Überprüfen der Bedingungen zur Laufzeit verursacht dabei zusätzlichen Aufwand und reduziert die Geschwindigkeit des erzeugten x86-Binärcode 4. Außerdem ist es auch auf diesem Wege nicht möglich, das Computerprogramm 1 zu erweitern oder zu verbessern.

Ein zweiter verbesserter Ansatz besteht darin, den Binärcode 2 zunächst mittels eines Disassemblers 5 in einen Assemblercode 6 für die Quellplattform SP, also beispielsweise in ein S/390-Assemblerprogramm, zu disassemblieren und den Assemblercode 6 nachfolgend, Befehl für Befehl, mittels eines Übersetzungsprogramms 7, beispielsweise das Programm ASSTRAN der Firma Fujitsu Technology Solutions GmbH, in einen Binärcode für die Zielplattform TP, hier beispielsweise einen zweiten x86-Binärcode 8, zu übersetzen. Dieser Ansatz besitzt unter anderem den Vorteil, dass der Aufwand zur Analyse und zur Übersetzung nur einmal anfällt und nicht bei jeder erneuten Ausführung des Computerprogramms 1 auf der Zielplattform TP. Abhängig von der Komplexität des S/390-Binärcode 2 ist in einzelnen Fällen auch eine geringfügige Optimierung des erzeugten x86-Binärcodes 8 möglich, beispielsweise hinsichtlich der Benutzung von CPU-Registern der Zielplattform TP. Gegenüber der JIT-Übersetzung gemäß dem ersten verbesserten Ansatz muss außerdem nicht bei jedem Sprungbefehl ein Sprungziel neu bestimmt werden.

Eine solche Übersetzung ist jedoch nur unter noch größeren Einschränkungen möglich. Beispielsweise ist sie bei sich selbst modifizierenden oder sich selbst interpretierenden Computerprogrammen grundsätzlich nicht möglich. Die Benutzung von sich selbst modifizierendem Binärcode war in der S/390-Architektur jedoch durchaus üblich. Zusätzlich kann das Einbetten von Daten in den S/390-Binärcode 2 bereits eine erfolgreiche Disassemblierung verhindern. In der Praxis funktioniert der zweite verbesserte Ansatz beispielsweise nicht für von einem Cobol-Compiler erzeugten Computerprogrammen. Außerdem kommt es immer noch zum Pumping des ursprünglichen S/390-Binärcode 2, weil nicht die ursprüngliche Programmlogik des Computerprogramms 1 in der Hochsprache übersetzt wird, sondern nur die Programmlogik des S/390-Binärcodes 2. Somit ist auch der zweite x86-Binärcode 8 des Computerprogramms 1 typischerweise umfangreicher und langsamer in der Ausführung als der ursprüngliche S/390-Binärcode 2 beziehungsweise seine Ausführung auf der Quellplattform SP.

Die CN 107908955 A offenbart ein Verfahren und System zum Schutz der Kontrollflussintegrität auf Grundlage einer Zwischensprachenanalyse, wobei Quellcode in eine LLVM-Zwischensprache übersetzt wird und ein Binärprogramm in die LLVM-Zwischensprache disassembliert wird.

Die US 5,860,008 A offenbart ein Verfahren und eine Vorrichtung zum Dekompilieren eines kompilierten, interpretierenden Codes, gekennzeichnet durch die Schritte des Erstellens eines Arrays von Namen und eines Arrays von Literalen aus einer Vielzahl von kompilierten, interpretierenden Codebytes und des sequentiellen Konvertierens jedes Codebytes in ein Codefragment unter Verwendung des Codebytes, des Arrays von Namen und des Arrays von Literalen.

Der vorliegenden Erfindung liegt unter anderem die Aufgabe zugrunde, eine Möglichkeit zur besseren Pflege und Nutzung von Computerprogrammen zu schaffen, die ausschließlich in einer maschinennahen, niedrigen Darstellung, insbesondere als Binärcode, vorliegen. Unter anderem soll eine Möglichkeit geschaffen werden, die Ausführung solcher Computerprogramme auf einer anderen Computerplattform zu beschleunigen. Diese Aufgabe wird anspruchsgemäß durch ein Verfahren zum Erzeugen einer Darstellung einer Programmlogik in einer Zwischensprache gemäß Anspruch 1 gelöst.

Durch die in Anspruch 1 genannten Schritte kann eine Programmlogik eines Computerprogramms basierend auf Programmcode einer niedrigen Programmiersprache für eine erste Prozessorarchitektur zurückgewonnen werden. Mit dem Begriff "Programmlogik" ist die Semantik des Computerprogramms gemeint, also der vom Programmierer in der Hochsprache ausgedrückten Algorithmus zur Datenverarbeitung. Die Rückgewinnung der Programmlogik wird unter anderem dadurch ermöglicht, dass Codemuster des ursprünglich zur Erzeugung des ersten Programmcodes verwendeten Compilers berücksichtigt werden. Dabei wird die Programmlogik nicht in der ursprünglich verwendeten Hochsprache dargestellt, sondern in einer Zwischensprache, die nicht spezifisch für eine bestimmte Hochsprache oder Maschinenarchitektur ist.

Im Allgemeinen ist es nicht möglich, den Quellcode eines Computerprogramms in einer Hochsprache basierend auf Assembler- oder Binärcode des kompilierten Computerprogramms zurückzugewinnen. Die Erfinder haben jedoch erkannt, dass zumindest dessen Programmlogik zurückgewonnen werden kann, sofern der zur Erzeugung des Assembler- oder Binärcodes verwendete Compiler und/oder die zur Erzeugung verwendete Programmiersprache bekannt oder zumindest eingrenzbar sind. Insbesondere kann eine Programmlogik dann rekonstruiert werden, wenn bekannt ist, welche Codemuster von einem Compiler zum Codieren von bestimmten Elementen eines ursprünglich in einer Hochsprache codierten Computerprogramms verwendet wurden. Solche Codemuster können beispielsweise durch Analyse eines sogenannten Codeerzeugungsmoduls (englisch: "code generator backend") eines Compilers ermittelt werde.

Mittels dieser Codemuster wird insbesondere eine Identifizierung von in dem ersten Programmcode enthaltenen Parametern möglich. Die Zuordnung von spezifischen Parameterwerten für jeden Codeabschnitt ermöglicht es dabei insbesondere, gleichartige, aber auf unterschiedliche Variablen oder Ausdrücke gerichtete Codemuster, wie beispielsweise unterschiedliche oder verschachtelte Programmschleifen mit unterschiedlichen Schleifenvariablen, voneinander zu unterscheiden.

Die Erfinder haben des Weiteren anderem erkannt, dass zur Kompilierung von Computerprogrammen für Mainframe-Architekturen sehr häufig, in etwa 80 Prozent der untersuchten Programme, die Programmiersprache COBOL verwendet wurde und der ursprüngliche COBOL-Programmcode durch Verwendung nur weniger, linear arbeitender Compiler ohne Codeoptimierung in eine Binärcodedarstellung des Computerprogramms übersetzt wurde. Unter Berücksichtigung der bekannten Eigenarten des beziehungsweise der verwendeten Compiler, insbesondere bekannter COBOL-Compiler, ist daher eine Gewinnung einer Darstellung einer durch das Computerprogramm implementierten Programmlogik in einer Zwischensprache möglich. Diese Darstellung enthält zwar nicht den vollständigen Quellcode der ursprünglich zur Programmierung verwendeten Hochsprache, wie insbesondere die vom Programmierer verwendeten Variablennamen oder Kommentare, gestattet jedoch unter anderem eine Pflege des Computerprogramms sowie die automatische, statische Erzeugung von effizientem Binärcode für eine gewünschte Zielplattform.

Durch die beschriebene Erzeugung einer Darstellung der vorbestimmten Programmlogik in einer Zwischensprache können insbesondere für die ursprüngliche Zielplattform spezifische, auf der neuen Zielplattform jedoch nicht effizient abbildbaren Teile des ersten Programmcodes von der eigentlichen Programmlogik getrennt und somit eine Übersetzung des Computerprogramms in effizienten Code für die Zielplattform ermöglicht werden.

Anspruchsgemäß werden im Schritt des Aufteilens die Codeabschnitte des ersten Programmcode mittels Mustervergleich mit der vorbestimmten Menge von zumindest teilweise parametrisierten, für den Compiler spezifischen Codemustern verglichen. Eine Zuordnung eines korrespondierenden Terminalsymbols erfolgt nur dann, wenn für den untersuchten Codeabschnitt eine konsistente Zuordnung von Parameterwerten für jeden Parameter eines korrespondierenden parametrisierten Codemusters möglich ist. Ein derartiger, parameterbasierter Mustervergleich verhindert mögliche Fehlzuordnungen bei der Analyse des ersten Programmcodes. Beispielsweise kann damit eine Sequenz von Maschinenbefehlen, die zufällig einem vorbestimmten Codemuster entspricht, aber tatsächlich keine zusammengehörige Funktionalität erfüllt und nicht von einem Compiler erzeugt wurde, von einer äquivalenten Sequenz mit in sich konsistenten Parameterwerten unterschieden werden, die tatsächlich von einem Codeerzeugungsmodul eines Compilers erzeugt wurde.

Anspruchsgemäß wird im Schritt des Zuordnens wenigstens eine kontextabhängige Bedingung für ein Nichtterminalsymbol der Zwischensprache basierend auf den im Schritt des Aufteilens erfassten Parameterwerten überprüft, und eine mögliche Zuordnung zu dem Nichtterminalsymbol als unzutreffend verworfen, wenn die wenigstens eine kontextabhängige Bedingung durch die erfassten Parameterwerte der korrespondierenden Codeabschnitte nicht erfüllt wird. Auch bei der Zuordnung der einzelnen Terminalsymbole zu Nichtterminalsymbolen, also komplexeren Ausdrücken der Zwischensprache, können die zugeordneten Parameterwerte herangezogen werden, um mögliche Fehlzuordnungen zu verhindern. Beispielsweise kann ein Hochzähler einer Schleifenvariablen der richtigen Programmschleife einer Vielzahl von möglicherweise ineinander verschachtelten Programmschleifen zugeordnet werden. Zusammen bilden die von den zugeordneten Parametern abhängigen und somit kontextabhängigen Bedingungen für alle Zuordnungsregeln der Nichtterminalsymbole der Zwischensprache ein deklaratives Regelsystem, das bei der Rückgewinnung der Programmlogik einzuhalten ist. Eine Zuordnung gemäß einer möglichen Zuordnungsregel der Zwischensprache ist nur dann zulässig, wenn die entsprechenden Bedingungen durch die konkret parametrisierten Nichtterminalsymbole eingehalten werden.

In wenigstens einer Ausgestaltung wird im Schritt des Zuordnens eine der Sequenz von Codeabschnitten zugeordnete Sequenz von Terminalsymbolen durch einen Parser, insbesondere einen Bottom-Up-Parser, in eine hierarchische Darstellung, insbesondere einen Syntaxbaum, der Programmlogik überführt. Dabei entsprechen die übergeordnete Elemente der hierarchischen Darstellung beziehungsweise die inneren Knoten des Syntaxbaumes den Nichtterminalsymbolen der Zwischensprache. Die ausschließlich untergeordneten Elemente der hierarchischen Darstellung beziehungsweise die Blätter des Syntaxbaumes entsprechenden Terminalsymbolen der Zwischensprache.

Mit anderen Worten handelt es sich bei den Terminalsymbolen der Zwischensprache um die atomaren Elemente einer Hochsprache und bei den Nichtterminalsymbolen um Programmkonstrukte, insbesondere zusammengesetzte Programmkonstrukte. Programmkonstrukte einer Hochsprache umfassen beispielsweise die Auswertung von Ausdrücken und Bedingungen, das Durchlaufen von Programmschleifen und das Aufrufen von Unterprogrammen.

Die Verwendung eines derartigen Parsers in Verbindung mit einer hierarchischen Darstellung ermöglicht ein einfaches Zuordnen von unterschiedlichen atomaren Elementen zu komplexeren, generischen Programmkonstrukten mittels Reduktionsregeln einer Grammatik. Eine solche Darstellung kann beispielsweise mittels eines Bottom-Up-Parsers, insbesondere eines LR-Parsers, unter Verwendung einer kontextfreien Grammatik (auch bekannt als Typ-2-Grammatik in der sogenannten Chomsky-Hierarchie) der Programmkonstrukte der Zwischensprache erstellt werden.

Gemäß wenigstens einer Ausgestaltung sind die Nichtterminalsymbole der Zwischensprache charakteristisch für eine Mehrzahl von imperativen, höheren Programmiersprachen, wie beispielsweise COBOL, FORTRAN, S3, Algol und/oder C. Alle oben genannten Programmiersprache nutzen ähnlich Programmkonstrukte, wie etwa eine Überprüfung einer Bedingung, eine bedingte Ausführung eines Programmabschnitts, ein Auswerten eines arithmetischen Ausdrucks, eine Zuweisung eines Wertes zu einer Variable, ein Aufruf eines anderen Programmabschnitts mit optionaler Übergabe von einem oder mehreren Parameterwerten oder -referenzen, insbesondere ein Aufrufen eines Unterprogramms und eine Rückkehr daraus, und ein Durchlaufen einer Programmschleife. Solche Programmkonstrukte können auf einer niedrigeren Ebene beispielsweise über bedingte Sprünge oder Sprünge in bedingtem Code realisiert werden. Durch Ausnutzung von Hintergrundwissen über die zur Erstellung von Computerprogrammen besonders häufig verwendeter Programmiersprachen kann die Rückgewinnung der gesuchten Programmlogik in eine geeignete Zwischensprache vereinfacht werden.

In wenigstens einer Ausgestaltung wird im Schritt des Erzeugens zweiter Programmcode in einer niedrigen Programmiersprache für eine zweite Prozessorarchitektur basierend auf den zugeordneten Nichtterminalsymbolen der Zwischensprache erzeugt. Dabei werden bei einem Ausführen des zweiten Programmcodes auf einem Prozessor mit der zweiten Prozessorarchitektur Programmschritte gemäß der in der Hochsprache definierten Programmlogik ausgeführt. Diese Ausgestaltung dient insbesondere zum automatschen Erzeugen von ausführbarem Code für eine vorgegebene Zielplattform, wie beispielsweise die Intel x86-Architektur.

In wenigstens einer Ausgestaltung wird im Schritt des Erzeugens für die zweite Prozessorarchitektur optimierter zweiter Programmcode erzeugt. Ausgehend von der Darstellung in der Zwischensprache ist eine Optimierung des erzeugten Programmcodes, beispielsweise durch Einsatz von für die Zielplattform optimierten Datentypen oder auf Grundlage einer Datenflussanalyse der Programmlogik möglich, was zu einer weiteren Beschleunigung bei einer Ausführung des erzeugten zweiten Programmcodes führt.

Die oben genannte Aufgabe wird des Weiteren durch eine Dekompiliervorrichtung, ein Rekompiliersystem und Computerprogrammprodukte gemäß den angehängten Ansprüchen gelöst.

Weitere vorteilhafte Ausgestaltungen der Erfindung sind in der nachfolgenden Beschreibung von Ausführungsbeispielen sowie den angehängten Patentansprüchen offenbart.

Die Erfindung wird nachfolgend anhand von Ausführungsbeispielen basierend auf den angehängten Figuren im Detail erläutert. Darin zeigen:
- Figur 1: eine schematische Darstellung bekannter Codeübersetzungsverfahren,
- Figur 2: eine schematische Darstellung eines erfindungsgemäßen Codeübersetzungsverfahrens,
- Figur 3: ein Ablaufdiagramm eines Verfahrens zum Erzeugen einer Darstellung einer Programmlogik,
- Figur 4: eine schematische Darstellung einer Dekompiliervorrichtung und eines Rekompiliersystems,
- Figuren 5A und 5B: beispielhafte Zuordnungen von parametrisierten Tokens zu verschiedenen Programmkonstrukten, und
- Figur 6: eine Baumdarstellung eines Teils einer rekonstruierten Programmlogik.

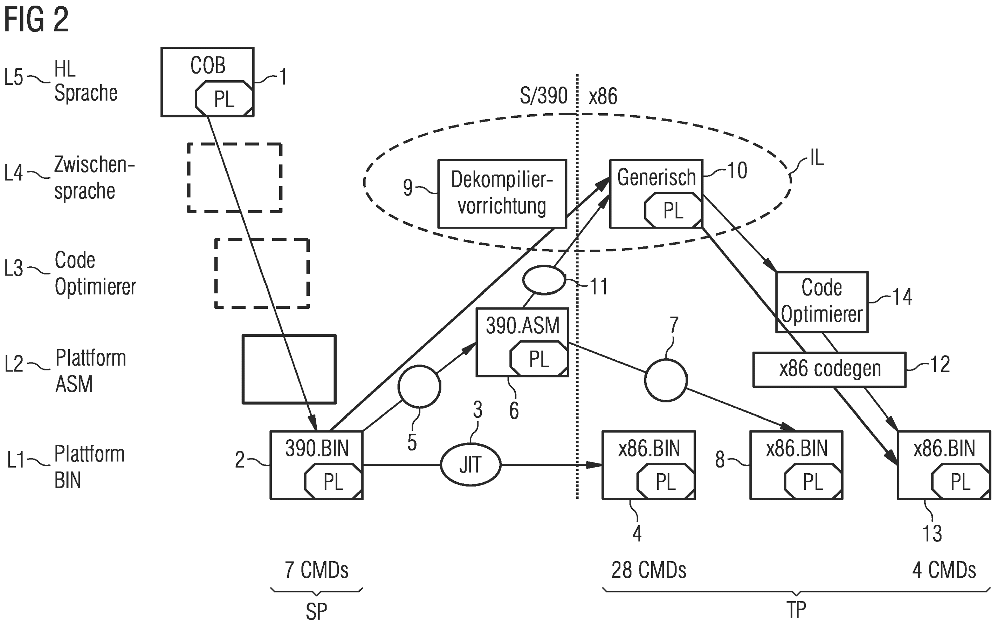

Figur 2 zeigt schematisch ein erfindungsgemäßes Verfahren zum Übersetzen von Binärcode einer Quell-Prozessorarchitektur in entsprechenden Binärcode einer Ziel-Prozessorarchitektur. Zur besseren Vergleichbarkeit sind in der Figur 2 die anhand der Figur 1 bereits beschriebenen Möglichkeiten zur direkten Übersetzung von S/390-Binärcodes 2 in einer Binärcodeebene L1 in ersten x86-Binärcode 4 beziehungsweise einer indirekten Übersetzung in einer Assemblercodeebene L2 in zweiten x86-Binärcode 8 erneut dargestellt. Zusätzlich wird ein dritter Weg dargestellt, der insbesondere die Erzeugung einer Darstellung einer Programmlogik PL des Computerprogramms 1 auf einer Zwischensprachenebene L4 umfasst.

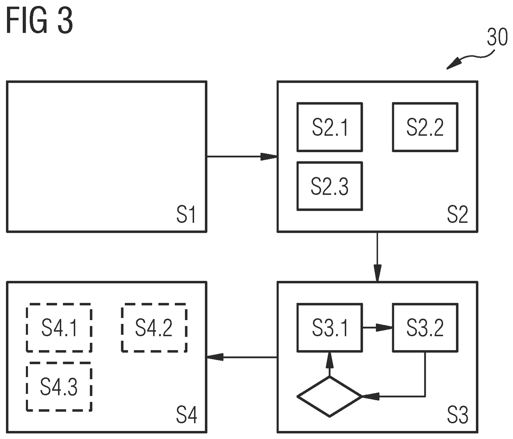

Im Ausführungsbeispiel erzeugt eine Dekompiliervorrichtung 9 direkt aus dem S/390-Binärcode 2 generischen Programmcode 10 in einer Zwischensprache IL (englisch: "intermediate language"). Der generische Programmcode 10 beschreibt eine durch das Computerprogramm 1 auf einer Hochsprachenebene L5 definierten Semantik in Form einer Programmlogik PL. Das hierzu verwendete Verfahren wird unten anhand des Ablaufdiagramms gemäß Figur 3 im Einzelnen beschrieben. Alternativ kann der generische Programmcode 10 mittels eines Analyseprogramms 11 aus disassemblierten Assemblercode 6 generiert werden.

Der generische Programmcode 10 in der Zwischensprache IL enthält für die Gruppe von imperativen Programmiersprachen typische Programmkonstrukte, wie beispielsweise die Auswertung von arithmetischen Ausdrücken, die Definition von Programmschleifen oder den Aufruf von Unterprogrammen, sowie einzelne nicht weiter auflösbare, atomare Elemente, wie beispielsweise den Zugriff auf Variablen oder Konstanten. Mittels solcher Programmkonstrukte lassen sich neben den oben genannten Programmiersprachen auch Programme etlicher objektorientierter Programmiersprachen ausdrücken. Lediglich Programme rein deklarativer Programmiersprachen lassen sich nicht in einer derartigen Zwischensprache ausdrücken.

Ausgehend von der zurückgewonnenen Programmlogik PL wird mittels eines geeigneten Codeerzeugungsmoduls Maschinen- oder Assemblercode für eine oder mehrere Zielplattformen TP erstellt. Im Ausführungsbeispiel wird der x86-Codegenerator 12 der GNU Compiler Collection (GCC) verwendet, um dritten ausführbarer x86-Binärcode 13 zu erzeugen. Dabei berücksichtigt das verwendete Codeerzeugungsmodul unmittelbar die Möglichkeiten der Prozessorarchitektur der Zielplattform TP. Dementsprechend kann bei der Erzeugung des dritten Binärcodes 13 auf einer zusätzlichen Codeoptimierungsebene L3 optional ein Codeoptimierer 14 verwendet werden, der den generischen Programmcode 10 in der Zwischensprache IL in einer besonders effizienten Weise auf Maschinenbefehle der Prozessorarchitektur der Zielplattform TP abbildet.

In der Figur 2 ist der dabei erreichbare Performancegewinn dargestellt. Beispielsweise kann ein einzelner Ausdruck (englisch: "statement") eines Computerprogramms 1 in einer Hochsprache wie COBOL in sieben Maschinenbefehle der Quellplattform SP, hier S/390, übersetzt werden. Bei einer JIT-Übersetzung in ersten x86-Binärcode 4 der Zielplattform TP entstehen aus den sieben S/390-Befehlen 28 x86-Maschinenbefehle. Eine Übersetzung desselben S/390 Binärcodes 2 in den zweiten x86-Binärcode 8 mittels des Übersetzungsprogramms 7 ASSTRAN ist nicht möglich, da der S/390 Binärcodes 2 ursprünglich von einem COBOL-Compiler erzeugt wurde. Wird, wie in der Figur 2 angedeutet, zunächst eine Darstellung der Programmlogik PL des S/390 Binärcodes 2 in einer Zwischensprache IL zurückgewonnen und diese nachfolgend unter Verwendung des x86-Codegenerator 12 in den dritten x86-Binärcode 13 übersetzt, kann dasselbe Statement durch nur vier Maschinenbefehle eines x86-Prozessors der Zielarchitektur implementiert werden. Somit ergibt sich bei der Ausführung des Computerprogramms 1 auf der Zielplattform TP ein erheblicher Effizienzgewinn, im vorliegenden Beispiel um den Faktor Sieben gegenüber dem JIT-Übersetzer 3.

Es wird darauf hingewiesen, dass die in der Figur 2 dargestellten, von modernen Compilern verwendeten Zwischensprachenebene L4, Codeoptimierungsebene L3 und gegebenenfalls auch einer darunterliegenden Assemblercodeebene L2 in vielen Compilern der 1950er bis 1980er Jahre nicht vorhanden waren. Die entsprechenden Zwischenschritte beziehungsweise -ebenen L2 bis L4 für die Erstellung des S/390-Binärcodes 2 für die Quellplattform SP sind daher in der Figur 2 nur durch gestrichelte Linien beziehungsweise durch schraffierte Flächen angedeutet und konzeptionell zu verstehen. Faktisch haben viele Compiler für Mainframe-Systeme Computerprogramme 1 aus einer Hochsprache wie COBOL direkt in Binärcode einer Zielplattform TP, beispielsweise den S/390-Binärcode 2, übersetzt. Dabei wurden typischerweise linear arbeitende Compiler ohne Codeoptimierung eingesetzt, die einen relativ ineffizienten Binärcode erzeugten. Der so erzeugte Binärcode ist jedoch besonders einfach analysierbar, was die erfindungsgemäße Rekonstruktion der darin codierten Programmlogik PL vereinfacht, wie nachfolgend ausgeführt.

Im Folgenden wird eine als "Rekompilierung" bezeichnete Übersetzung eines ursprünglich in der Programmiersprache COBOL erstellten und zu S/390-Binärcode 2 kompilierten Computerprogramms 1 in korrespondierenden x86-Binärcode 13 beschrieben. Selbstverständlich ist die Erfindung nicht auf die zuvor genannten Quell- und Zielplattformen, die Programmiersprache COBOL oder die nachfolgend beschriebenen Codemuster und Symbole der Zwischensprache IL beschränkt. Vielmehr lässt sie sich auf eine Vielzahl weiterer Plattformen wie die ICL-Serie 39, IBM S/360 oder S/370, die Programmiersprachen FORTRAN, S3, Algol oder C und zugehörige Codemuster sowie Zwischensprachen mit anderen Grammatiken übertragen.

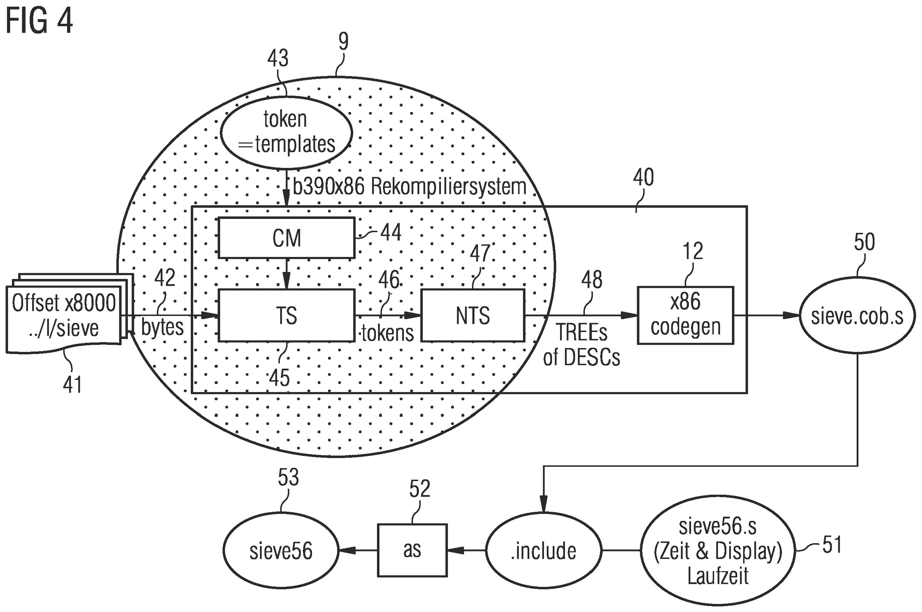

Figur 3 zeigt ein Ablaufdiagramm eines Verfahren 30 zum Erzeugen einer Darstellung einer Programmlogik PL eines S/390-Binärcodes 2 in einer Zwischensprache IL und zur nachfolgenden Erzeugung eines dritten x86-Binärcodes 13 basierend auf dieser Darstellung. Das Verfahren wird durch ein in Figur 4 schematisch dargestelltes Rekompiliersystem 40 durchgeführt.

Das Rekompiliersystem 40 umfasst ausführbaren Programmcode eines Computerprogramms, der in einem Speicher eines Computersystems abgelegt ist und durch einen Prozessor des Computersystems ausgeführt werden kann. Bei dem Computerprogramm kann es sich beispielsweise um ein Computerprogramm für die Quellplattform SP, für die Zielplattform TP oder für eine andere Plattform handeln. Das Computerprogramm kann auch auf einem verteilten System ausgeführt werden, bei dem ein oder mehrere Codeblöcke auf einem ersten Computersystem und ein oder mehrere andere Codeblöcke auf einem zweiten Computersystem ausgeführt werden.

In einem ersten Schritt S1 des Verfahrens 30 wird in dem S/390-Binärcode 2 enthaltener Maschinencode 41 und gegebenenfalls zusätzlich in dem S/390-Binärcode 2 enthaltene, so genannte Inline-Daten erfasst. Der S/390-Binärcode 2 wurde ursprünglich durch Kompilierung eines Computerprogramm 1 in der Hochsprache COBOL erzeugt. Der COBOL-Quellcode liegt jedoch nicht mehr vor.

Im Ausführungsbeispiel wird zunächst ein Adress-Offset-Wert x8000 als Startadresse des eines ersten Befehls eines Maschinencodeanteils in einer Archivdatei vorgegeben. An dieser Adresse beginnt der eigentliche Maschinencode 41 innerhalb des S/390-Binärcodes 2. Der S/390-Binärcode 2 wird in eine Sequenz von einzelnen Bytes zerlegt, der der Dekompiliervorrichtung 9 als sogenannter Bytestrom 42 (englisch: "byte stream") zur Verfügung gestellt wird.

In einem zweiten Verfahrensschritt S2 wird der erfasste S/390-Binärcode 2 in eine Liste von Codemustern CM mit korrespondierenden Terminalsymbolen TS einer formalen Zwischensprache IL aufgeteilt. Dabei entsprechen die den Terminalsymbolen TS der Zwischensprache IL zugeordneten Codemustern CM im Wesentlichen den Codemustern des zur Erzeugung des S/390-Binärcodes 2 verwendeten Compilers, also beispielsweise eines COBOL-Compilers. Ein Beispiel für ein solches Codemuster CM ist eine Sequenz von Maschinenbefehlen zum Zugriff auf einen Wert einer an einer bestimmten Adresse gespeicherten Variablen oder das Laden eines Registers mit einem konstanten Wert.

Für diese Aufteilung muss der eigentliche Maschinencode 41 in dem vorliegende S/390-Binärcode 2 erkannt werden. Insbesondere muss ermittelt werden, wo in dem S/390-Binärcode 2 Maschinenbefehle stehen. Diese müssen von anderen in dem S/390-Binärcode 2 enthaltenen Daten, sogenannten Inline-Daten, abgrenzbar sein.

Eine derartige Analyse ist in der Regel möglich, wenn der Binärcode disassemblierbar ist. Hierzu müssen eine Startadresse des Computerprogramms 1 und der Befehlssatz des Prozessors der Quellplattform SP bekannt sein, insbesondere welche Länge die einzelnen Maschinenbefehle haben. Dies ist typischerweise durch die Anzahl der zur Ausführung jedes Maschinenbefehls erforderlichen Parameter vorgegeben und für bekannte Computerplattformen entsprechend dokumentiert.

Anders als bei einer klassischen Disassemblierung, bei der ein vorliegender Binärcode als Sequenz von Maschinenbefehlen angenommen wird, ist eine Erkennung von Maschinenbefehlen bei der beschriebenen Dekompiliervorrichtung 9 auch dann möglich, wenn der zur Erzeugung des Binärcodes verwendete Compiler nach bestimmten Mustern Inline-Daten in den erzeugten Binärcode eingefügt hat, beispielweise zum Speichern von großen Konstanten. Durch Berücksichtigung bekannter Codemuster des verwendeten Compilers kann auf die Position und den Umfang eventuell in dem Binärcode enthaltenen Inline-Daten zurückgeschlossen werden. Selbst ein sich selbst modifizierender Binärcode kann gegebenenfalls analysiert werden, wenn er mittels bekannter Codemuster erzeugt wurde, beispielweise um das Durchlaufen eines bestimmten Programmteils zur Laufzeit zu kontrollieren. Sind die vom Compiler verwendeten Muster bekannt, kann ermittelt werden, wo Maschinenbefehle in dem Binärcode 2 enthalten sind und diese so von anderen Daten getrennt werden.

Zur Implementierung des Schritts S2 werden in einem ersten Teilschritt S2.1 eine Mehrzahl von für den ursprünglich verwendeten Compiler typischen Codemustern CM bereitgestellt. Die Gesamtheit der bereitgestellten Codemuster CM entspricht einer Grammatik zum umgekehrten Kompilieren des S/390-Binärcodes 2 in die Terminalsymbole TS der Zwischensprache IL. Zumindest einige dieser Codemuster CM treten in dem S/390-Binärcode nicht immer in unveränderter Form auf, sondern sind selbst durch wenigstens einen Parameter, wie beispielsweise einen Zahlenwert, eine Speicheradresse, oder ein Register, charakterisiert. Auch Inline-Daten können in einem Codemuster definiert sein. Zur Erkennung solcher parametrisierter Codemuster CM eignet sich insbesondere ein Mustervergleicher.

Typischerweise verwendet jeder Compiler einen Codegenerator und eine Anzahl von vorbestimmten Codemustern CM, um aus einem eingangsseitigen Computerprogramm 1 in einer Hochsprache wie COBOL einen ausgangsseitigen, kompilierten Code in einer niedrigen Programmiersprache, insbesondere Binärcode oder Assemblercode, zu erzeugen. Die nachfolgend beschrieben Rückgewinnung der Programmlogik PL beruht auf einer Analyse beziehungsweise Kenntnis dieser Codemuster CM.

Im Ausführungsbeispiel werden die verwendeten Codemuster CM, inklusive einer Definition der in den einzelnen Codemustern CM enthaltenen Parameter, in einer Textdatei 43 mit dem Namen "token" vorgegeben. Die darin enthaltenen Codemuster CM werden durch einen Musterparser 44 in die Dekompiliervorrichtung 9 eingelesen.

Die Codemuster CM können durch Analyse eines sogenannten Codeerzeugungsmoduls (englisch: "code generator backend") eines Compilers die zur Umsetzung von bekannten atomaren Elementen einer Hochsprache verwendeten Maschinencodesequenzen als Muster zur Verfügung gestellt werden. Atomare Elemente einer Hochsprache umfassen beispielsweise konstante Werte und das Abrufen oder Zuweisen von Variableninhalten. Alternativ ist es auch möglich, entsprechende Muster durch Analyse bekannter Computerprogramme 1, zu denen bevorzugt sowohl der Quellcode in einer Hochsprache als auch kompilierter Code in einer niedrigen Programmiersprache vorliegen, zu ermitteln. Dieses Vorgehen bietet sich insbesondere an, wenn der Quellcode des Compilers selbst nicht mehr verfügbar ist.

Je nach Komplexität des verwendeten Compilers können eine Vielzahl von unterschiedlichen Codemustern CM verwendet werden. Im beschriebenen Ausführungsbeispiel eines relativ alten COBOL-Compilers konnte mit 37 durch Analyse ermittelten Codemustern CM eine Anzahl von Testprogrammen erfolgreich dekompiliert werden. Es ist aber auch möglich, eine viel größere Anzahl von Codemustern CM zu berücksichtigen, insbesondere wenn diese automatisch aus einem Codeerzeugungsmoduls eines Compilers ableitbar sind.

Im beschriebenen Ausführungsbeispiel umfassen die Codemuster CM unter anderem Codemuster für Zugriffe auf einzelne Variablen oder Arrays, die Zuordnung von Werten, für die auf der S/390-Plattform typische Verarbeitung von binärcodierten Dezimalzahlen (BCD), bedingte und unbedingte Sprünge und korrespondierende Rücksprünge.

Nachfolgend wird der im Schritt S1 erzeugte Bytestrom 42 des S/390-Binärcodes 2 mit den im Schritt S2.1 erfassten Codemustern CM verglichen, um zugehörige Terminalsymbole TS der Zwischensprache IL zu ermitteln. Hierfür dient im Ausführungsbeispiel ein sogenannter Matcher 45, der einen mustererkennenden Scanner implementiert. Im Ausführungsbeispiel beginnt der Matcher 45 an der vorgegeben Startadresse des Bytestroms 42 mit der Zuordnung möglicher Codemuster. Dabei funktioniert der Matcher 45 prinzipiell selbst wie ein Assembler, der in einem ersten Durchlauf gemäß Teilschritt S2.2 eine Sequenz von konkret in dem Computerprogramm 1 verwendeten und parametrisierten Codemustern CM ermittelt. Beim ersten Durchlauf sind die Grenzen der einzelnen Codemuster CM und somit Sprungziele von Sprungbefehlen darin enthaltenen Sprungbefehlen noch nicht bekannt. Daher werden im ersten Durchlauf zunächst nur die entsprechende Sprungmarken (englisch: "label"), aber noch keine Ausgabe von parametrisierten Codemustern CM erzeugt.

In einem nachfolgenden zweiten Durchlauf wird in einem Teilschritt S2. wird basierend auf den im ersten Durchlauf erzeugten Sprungmarken eine Sequenz von konkret in dem Computerprogramm 1 verwendeten, gegebenenfalls parametrisierten Codemustern CM erzeugt. Als Ausgabe des Matchers 45 wird für jedes zugeordnete Codemuster CM ein korrespondierendes, entsprechend parametrisiertes Token 46 ausgegeben, das das konkrete Auftreten einer Instanz eines Codemusters CM mit den zugehörigen Parametern in dem S/390-Binärcode 2 darstellt.

Jeder Teil des eingehenden Bytestroms 42 wird einem Codemuster CM zugeordnet. Im Ausführungsbeispiel sind die meisten der verwendeten Codemuster CM parametrisierbar. Es ergibt sich ein Ausgangsstrom von konkret in dem Computerprogramm 1 verwendeten und parametrisierten Tokens 46, wobei jedes der Token einem Terminalsymbolen TS der Zwischensprache IL entspricht.

Die Arbeitsweise des Matchers 45 wird nachfolgend anhand eines Codemusters mit dem Namen "ARRAY_BCDIDX" zum Zugriff auf eine als BCD-Zahl codierte Index-Variable erläutert. Das nachfolgend dargestellte, vom Musterparser 44 eingelesen Codemuster ARRAY_BCDIDX ist durch insgesamt neun Parameter a, *b, o, l, t, r, t1, t2* und *12* parametrisiert. Es umfasst im Wesentlichen eine Folge von S/390-Maschinenbefehlen, deren Operanden durch die oben genannten Parameter definiert sind. Dabei dient die erste Spalte mit dem sogenannten Mnemonik (z.B. ".PACK") einer Assemblersprache des korrespondierenden, in der zweiten Spalte dargestellten Maschinenbefehls (z.B. hexadezimal F2h) nur zum besseren Verständnis. Der Matcher 45 sucht im S/390-Binärcode 2 direkt nach dem hexadezimalen Wert des jeweiligen Maschinenbefehls.

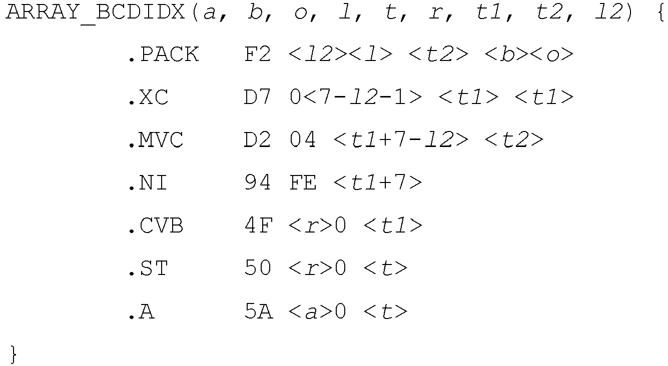

Im Ausführungsbeispiel sind die in spitzen Klammern angegeben Ausdrücke entweder Parameter des Codemusters CM oder eine Kombination aus Parametern mit festen Werten. Die Länge der einzelnen Parameter im Binärcode ist im Ausführungsbeispiel implizit durch ihre Namensgebung vorgegeben, kann selbstverständlich aber auch explizit angegeben werden.

Dieses und weitere Codemuster CM werden durch den Musterparser 44 aus der Textdatei 43 eingelesen, geparst und in einem Array mit möglichen Codemustern CM gespeichert. Der Musterparser 44 selbst ist als Top-Down-Parser, beispielsweise als rekursiver Abstiegsparser (englisch: "recursive descent parser") implementiert und unterstützt im Ausführungsbeispiel mehrere Hundert Codemustern CM. Selbstverständlich können auch andere Parser oder Konfigurationsmechanismen zum Definieren der Codemuster CM verwendet werden.

Wenn der eingehende Bytestrom 42 des S/390-Binärcodes 2 einem der vorgegebenen Codemuster CM entspricht, wird das entsprechende Codemuster CM geklont und die konkreten Parameterwerte des Bytestroms 42 für die in dem zugeordneten Codemuster enthaltenen Parameter in dem geklonten Codemuster CM gespeichert. Dabei sind konstante Werte und Parameterwerte der Codemuster zu berücksichtigen. Tritt ein Parameter mehrfach in einem Codemuster CM auf, wird das entsprechende Codemuster CM nur dann zugeordnet, wenn eine konsistente Belegung aller darin enthaltener Parameter möglich ist. Dabei werden die in den spitzen Klammern angegeben Ausdrücke durch den Matcher 45 ausgewertet und mit den an der entsprechenden Stelle des Bytestroms 42 stehen Werten verglichen. Die Belegung der Parameter stellt somit eine Lösung des deklarativen Codemusters CM dar.

Beispielsweise wird der Parameter *t1* im Codemuster ARRAY_BCDIDX insgesamt fünf Mal verwendet. An jeder dieser Stellen muss derselbe Wert für *t1* beziehungsweise ein aus dem Parameterwert *t1* abgeleiteter Wert für die Ausdrücke *tl*+7*-12 und t1+7* im Binärcode stehen, um das Codemuster ARRAY_BCDIDX zuordnen zu können. Als weiteres Beispiel muss beim Maschinencode 41 der zweiten Zeile überprüft werden, ob das erste Byte des Bytestroms 42 nach dem Maschinenbefehlscode *D7* (.XC) vier Null-Bits (entsprechend dem hexadezimalem Wert *0h*), gefolgt der binären Darstellung des Ergebnisses des Ausdrucks *7 - 12 - 1* entspricht, wobei als Parameterwert für 12, der Wert verwendet wird, der als erster Operand des ersten Maschinenbefehls *F2* (.PACK) aus dem Bytestrom 42 eingelesen wurde. Des Weiteren wird überprüft, ob der Wert des dritten Operanden mit dem Wert des zweiten Operanden übereinstimmt, da diese beiden Operanden im Codemuster *ARRAY_BCDIDX* demselben Parameter *t1* entsprechen sollen, und so weiter.

Ist keine konsistente Zuordnung möglich, muss gegebenenfalls ein anderes Codemuster CM als das zunächst geprüfte verwendet werden. Ist überhaupt keine konsistente Zuordnung möglich, ist der eingangsseitige S/390-Binärcode 2 nicht in Codemuster beziehungsweise entsprechend parametrisierte Tokens zerteilbar und damit nicht erfolgreich dekompilierbar. In diesem Fall endet das Verfahren 30 mit einem Fehler. Dies ist insbesondere dann der Fall, wenn der S/390-Binärcode 2 nicht von einem zur Definition der Codemuster CM analysierten Compiler, sondern von einem anderen Compiler oder direkt aus einem Assemblerprogramm erzeugt wurde.

Im beschriebenen Ausführungsbeispiel macht sich der Matcher 45 zu Nutze, dass von bekannten COBOL-Compilern erzeugter S/390-Binärcode 2 typischerweise in einem einzigen, linearen Codeerzeugungsprozess mittels fester Codemuster erzeugt wird. Somit kann der S/390-Binärcode 2 umgekehrt ebenfalls in einem einzigen Durchlauf wieder entsprechenden Codemustern CM zugeordnet werden. Dementsprechend ist eine eindeutige Zuordnung für S/390-Binärcode 2 von ursprünglich in COBOL programmierten Computerprogrammen durch den Matcher 45 in der Regel möglich.

In einem Schritt S3 des Verfahrens 30 werden die den Terminalsymbolen TS der Zwischensprache IL entsprechenden, parametrisierten Token 46, die von dem Matcher 45 erfolgreich einem der Codemuster CM zugeordnet wurden, vorbestimmten Programmkonstrukten, entsprechend Nichtterminalsymbolen NTS der Zwischensprache IL zugeordnet. Eine Zuordnung muss dabei zwei getrennten Regelsätzen genügen. Zum einen muss eine Reduktion eines oder mehrerer Tokens 46 den Übersetzungsregeln bzw. Konstruktionen einer kontextfreien Grammatik der Zwischensprache IL genügen. Zum anderen müssen die Parameter der beteiligten parametrisierten Tokens 46 für eine jeweilige Konstruktionsregel gegebenenfalls vorgegebene deklarative Regeln einhalten. Mittels der deklarativen Regeln wird eine Kontextabhängigkeit der Zuordnung hergestellt. Ist eine Zuordnung zulässig, werden die den beteiligten Terminalsymbolen TS der Zwischensprache IL zugeordneten Parameterwerte an das erzeugte Nichtterminalsymbol durchgereicht.

In der Sprachentheorie wird eine formale Sprache durch eine Grammatik G definiert, sie sich als 4-Tupel G = (NTS, TS, S, P) beschreiben lässt. Dabei beschriebt NTS ein Alphabet von Nichtterminalsymbolen, TS ein Alphabet von Terminalsymbolen TS, S ein Startsymbol und P eine Menge von Übersetzungsregeln oder Produktionen, die die Übersetzung eines Nichtterminalsymbols NTS in ein oder mehrere Terminalsymbole TS oder Nichtterminalsymbole NTS beschreiben.

Die Zwischensprache IL ist eine abgeschlossene, kontextsensitive Sprache, deren Nichtterminale NTS und Produktionen P nicht spezifisch für die zur Programmierung des Computerprogramms 1 verwendete Hochsprache ist, sondern sich auf eine ganze Klasse von durch Kompilierung erzeugten Computerprogrammen in einer Assembler- oder Binärcodedarstellung anwenden lässt.

In der beschriebenen Dekompiliervorrichtung 9 übernimmt ein sogenannter LR-Parser 47, eine spezielle Form eines Bottom-Up- beziehungsweise Aufwärtsparsers, die Aufgabe der Zuordnung beziehungsweise Reduzieren der bereits vom Matcher 45 erkannten Terminalsymbole TS zu zusammengesetzten Nichtterminalsymbolen NTS der Zwischensprache IL. Anders als bei bekannten Parsern für kontextfreie Grammatiken wir hierbei die Kontextabhängigkeit der zuzuordnenden Nichtterminalsymbole NTS ausgenutzt.

Der Kontext der einzelnen Nichtterminalsymbole NTS wird im Ausführungsbeispiel im Schritt des Reduzierens anhand der Überprüfung der den Terminalsymbolen TS zugeordneten Parameterwerte mittels deklarativer Regeln überprüft. Beispielsweise kann in einer Definition der Nichtterminalsymbole NTS vorgegeben werden, welche Parameter mit den vom Matcher 45 erkannten Parametern der Codemuster CM übereinstimmen müssen, um verschiedene Terminalsymbole TS oder Nichtterminalsymbole NTS zu einem übergeordneten Nichtterminalsymbol NTS zu reduzieren, wie beispielsweise dem Durchlaufen einer Programmschleife mit einer Zählvariable. Im beschriebenen Ausführungsbeispiel sind die zu überprüfenden Regeln im Programmcode des LR-Parsers 47 fest implementiert. Alternativ ist es auch möglich, die zu überprüfenden Regeln in Form einer Konfigurationsdatei beim Start in den Parser 47 einzulesen.

Der aus den parametrisierten Tokens 46 oder Terminalsymbolen TS und den Programmkonstrukten oder Nichtterminalsymbole NTS der Grammatik der Zwischensprache IL gebildete Syntaxbaum stellt in seiner Gesamtheit die dem ursprünglichen Computerprogramm 1 zugrundeliegende Programmlogik PL dar. Der Wurzel des Syntaxbaumes entspricht dabei dem Startsymbol S der Grammatik, aus dem die komplette Programmlogik PL herleitbar ist. Mit anderen Worten ausgedrückt gibt es zu jedem konkreten Computerprogramm 1 einen korrespondierenden Syntaxbaum, das beziehungsweise der einem Wort der Zwischensprache IL entspricht.

Zur Implementierung des Schritts S3 wählt der LR-Parser 47 in einem ersten Teilschritt S3.1 ein Nichtterminalsymbol NTS entsprechend der Grammatik G der Zwischensprache IL aus, das gemäß einer zugehörigen Übersetzungsregel P geeignet erscheint, die zuvor ermittelten Token 46 und/oder bereits erfolgreich zugeordnete Nichtterminalsymbole NTS zu substituieren. Dabei versucht der LR-Parser 47, eine möglich lange Übereinstimmung zwischen einer Sequenz von vom Matcher 45 bereitgestellten Tokens 46 und dem aktuell gewähltem Nichtterminalsymbol NTS der Zwischensprache IL zu finden.

In einem nachfolgenden Teilschritt S3.2 wird überprüft, ob die Parameter der im Teilschritt S3.1 zugeordneten Token 46 den deklarativen Regeln des ausgewählten Nichtterminalsymbols NTS beziehungsweise der zugehörigen Produktionsregel entsprechen. Ist dies der Fall, ist ein zutreffendes Programmkonstrukt ermittelt worden.

Andernfalls springt der LR-Parser 47 in den Teilschritt S3.1 zurück und versucht, eine andere Sequenz von Symbolen zu finden, die in ein anderes mögliches Nichtterminalsymbol NTS übersetzt werden kann. Die Zuordnung der Parameter der beteiligten Tokens 46 wird dann im Teilschritt S3.2 erneut geprüft, bis schließlich eine erfolgreiche Zuordnung gefunden wurde oder das Verfahren mit einem Fehler abbricht, weil kein Nichtterminalsymbol NTS gemäß den Regeln der Grammatik erfolgreich zugeordnet werden konnte.

Die Teilschritte S3.1 und S3.2 werden rekursiv so lange wiederholt, bis die Sequenz von Symbolen auf das Startsymbol S der Grammatik zurückgeführt wurde, das symbolisch der Programmlogik PL des Computerprogramms 1 entspricht. Ist dies möglich, ist das Computerprogramm 1 dekompilierbar. Andernfalls ist das Computerprogramm 1 nicht dekompilierbar und das Verfahren 30 bricht mit einem Fehler ab.

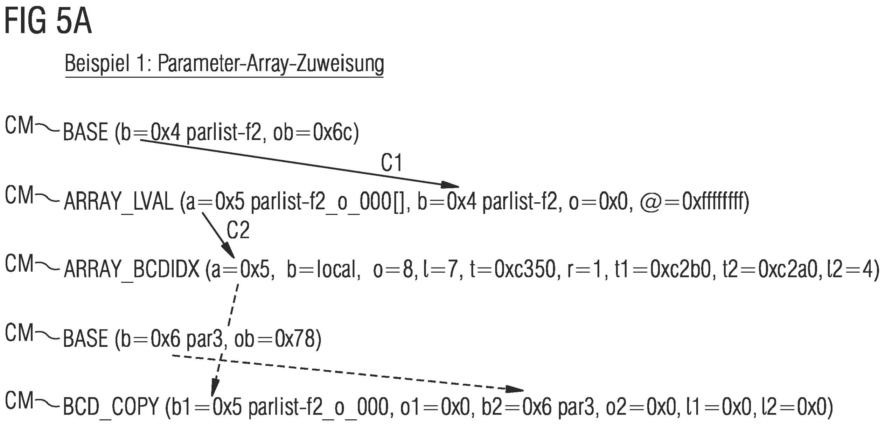

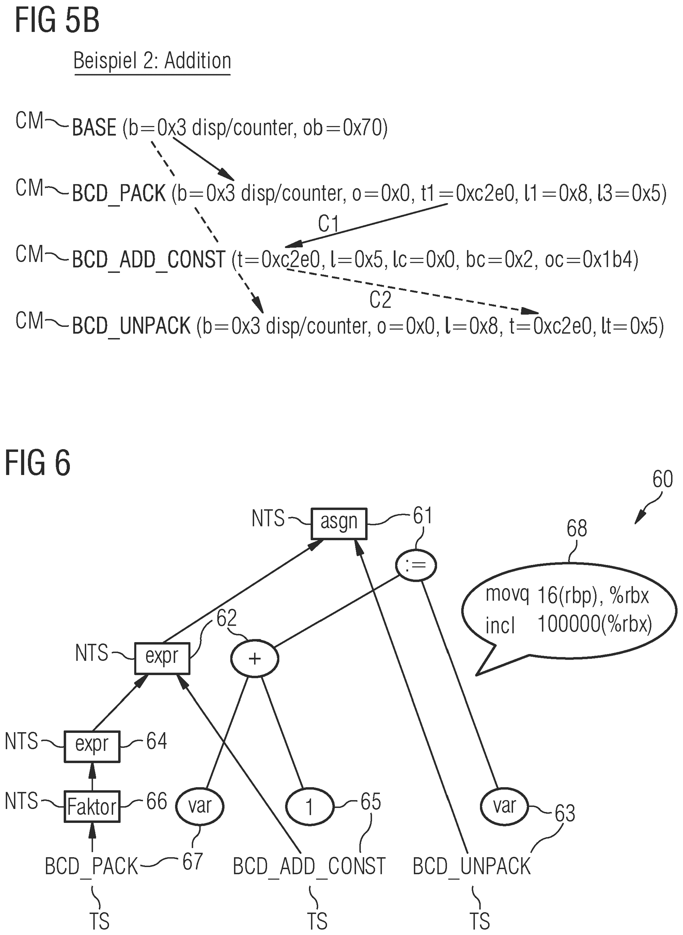

Nachfolgend wird der Betrieb des LR-Parsers 47 anhand von Beispielen weiter erläutert. Dazu sind in den Figuren 5A und 5B zwei Beispiele für eine Überprüfung einer Zuordnung von Nichtterminalsymbolen NTS zu parametrisierten Terminalsymbolen TS gemäß einer Sequenz von Tokens 46 mittels Pfeilen grafisch dargestellt. Darin zeigen die Pfeile Abhängigkeiten von Parametern der beteiligten Terminalsymbole TS.

Im Bespiel gemäß Figur 5A werden insgesamt fünf parametrisierte Tokens 46 entsprechend einer Sequenz von fünf korrespondierenden, parametrisierten Codemustern *BASE, ARRAY_LVAL, ARRAY_BCD_IDX, BASE, BCD_COPY* einem Programmkonstrukt "parameter array assign" zugeordnet. Dabei muss gemäß einer ersten Bedingung C1 der Wert des ersten Parameters b des ersten parametrisierten Codemusters *BASE* mit dem Wert des zweiten Parameters b des parametrisierten Codemusters *ARRAY*_*LVAL* übereinstimmen. Ebenso muss der Wert des ersten Parameters a des parametrisierten Codemusters *ARRAY_LVAL* gemäß einer zweiten Bedingung C2 mit dem Wert des ersten Parameters a des parametrisierten Codemusters *ARRAY_BCDIDX* übereinstimmen. Dabei bedeutet der Ausdruck "*a* = *0x5 parlist-f2_o_000[]* beispielsweise, dass im Register a an Adresse 0x5 eine Parameterliste mit Offset 0 gespeichert ist.

Diese Abhängigkeiten werden den LR-Parser 47 verifiziert. In äquivalenter Weise müssen die Zuordnung gemäß dem ersten Parameter a des parametrisierten Codemusters *ARRAY_BCDIDX* mit dem ersten Parameter *b1* des parametrisierten Codemusters *BCD_COPY* und die Zuordnung gemäß dem ersten Parameter b des zweiten parametrisierten Codemusters *BASE* mit dem dritten Parameter *b2* des parametrisierten Codemusters *BCD_COPY* übereinstimmen (in der Figur 5A gestrichelt angedeutet).

In der Figur 5B sind in äquivalenter Weise die Abhängigkeiten für ein zweites Programmkonstrukt dargestellt, der eine Addition von zwei Werten betrifft. Auch hier müssen in Form von deklarativen Regeln festgehaltene Randbedingungen eingehalten werden, damit vom LR-Parser 47 eine erfolgreiche Zuordnung der vier dargestellten, parametrisierten Tokens 46 beziehungsweise den dazu korrespondierenden Codemustern zu dem Programmkonstrukt "addition" vorgenommen werden kann.

Im Beispiel gemäß Figur 5B werden unter anderem zwei Bedingungen C1 und C2 überprüft. Der deklarative beziehungsweise attributive Teil der zugehörigen Regeln lässt sich als zusätzliche Bedingungen der Reduktionsregeln der Grammatik G darstellen. Nachfolgen sind die jeweiligen Bedingungen jeweils in doppelten eckigen Klammern hinter den zugehörigen Reduktionsregeln angegeben:

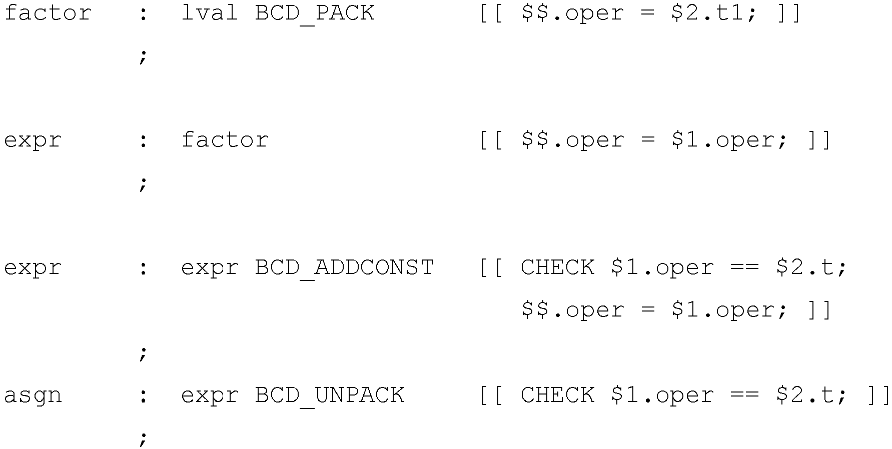

Dabei ist die obige Syntax mit den Symbolen $$, $1 und so weiter an die von den Yacc/Bison-Projekten bekannte Syntax angeglichen, wobei $$ für das reduzierte Nichtterminalsymbol, $1 und $2 für die erste beziehungsweise zweite Komponente der Konstruktionsregel und der Punkt-Operator für ein zuzuweisenden bzw. abzurufendes Attribute des jeweiligen Terminal- oder Nichtterminalelement der Zwischensprache IL.

In einem nachfolgenden Schritt S4 des Verfahrens 30 wird basierend auf den zugeordneten Programmkonstrukten der Zwischensprache IL eine hierarchische Darstellung 48 der Programmlogik PL des ursprünglichen Computerprogramms 1 erzeugt. Diese Darstellung kann unterschiedlichen Zwecken dienen und deshalb auch sehr verschieden ausfallen.

Gemäß einer ersten Variante S4.1 kann ein Syntaxbaum 60 der Nichtterminalsymbole NTS und der Terminalsymbole TS der Zwischensprache IL, wie sie in der Figur 6 angedeutet ist, ausgegeben werden. Dabei zeigt Figur 6 effektiv den Syntaxbaum 60 des Additionsausdrucks aus dem Beispiel gemäß Figur 5B. Wie in Figur 6 zu erkennen ist, entspricht die Addition auf höchster Ebene einem Zuweisungsausdruck 61. Mittels des Zuweisungsausdrucks 61 wird einer ausgewählten Variable 63 das Ergebnis eines untergeordneten Additionsausdruck 62 zugeordnet. Der Additionsausdruck 62 setzt sich wiederum aus einem weiteren Ausdruck 64 und einer Konstanten 65 zusammen. Der weitere Ausdruck 64 stellt einen untergeordneten Faktor 66 da, der wiederum einen Variablenabruf 67 in Form eine Codemusters BCD_PACK beinhaltet.

Wie in der Figur 6 zu erkennen, sind die Ausdrücke 61, 62 und 64 sowie der Faktor 66 durch Nichtterminalsymbole NTS der Zwischensprache IL verkörpert. Die zugewiesene Variable 63, die Konstante 65 und der Variablenabruf 67 sind durch Terminalsymbole TS verkörpert, die den parametrisierten Codemustern *BCD_UNPACK* zum Entpacken einer BCD-Variable, *BCD_ADD_CONST* zum Addieren einer Konstanten und *BCD_PACK* zum Packen einer BCD-Variable entsprechen.

Eine derartiger Syntaxbaum 60 ist insbesondere bei der Überprüfung der Zuordnung der einzelnen Parameter zu den Terminalsymbolen TS und Nichtterminalsymbolen NTS der Zwischensprache IL hilfreich.

Im Ausführungsbeispiel erzeugt der LR-Parser 47 mittels einer sogenannten LALR(1)-Grammatik (Lookahead-LR-Parser-Grammatik) aus der Liste der Tokens 46 die Darstellung eines entsprechenden Teils der Programmlogik PL in der Zwischensprache IL. Dabei wird im Beispiel effektiv eine hierarchische Darstellung 48 eines Computerprogramms 1 erzeugt, wie sie in der Figur 6 auszugsweise als Syntaxbaum 60 für den Additionsausdruck gemäß Figur 5B angegeben ist. Obwohl dies in der Figur 6 aus Gründen der Übersichtlichkeit nicht dargestellt ist, würde eine hierarchische Darstellung 48 einer vollständigen Programmlogik PL ein Wurzelelement *program* entsprechend einem Startsymbol S der Zwischensprache IL aufweisen, aus dem sich die gesamten Programmlogik PL des ursprünglichen Computerprogramm 1 ableiten ließe.

Gemäß einer zweiten Variante S4.2 kann eine Pseudocodedarstellung der erkannten Programmkonstrukte und erkannten Parameter ausgegeben werden. Eine solche Darstellung ist insbesondere hilfreich, wenn der ursprüngliche Quellcode eines Computerprogramms 1 verloren gegangen ist, aber ein Fehler in dem ursprünglichen Computerprogramm 1 behoben oder das Computerprogramm 1 gemäß geänderten Anforderungen weiterentwickelt werden soll. Ein Programmierer kann anhand einer solchen Darstellung erkennen, welche funktionalen Blöcke das Computerprogramm 1 durchläuft und sich somit mit vertretbarem Aufwand wieder die Bedeutung einzelner Parameter erschließen. Mit anderen Worten hilft eine derartige Darstellung insbesondere beim Pflegen von nicht oder nicht ausreichend dokumentierten Computerprogrammen 1, zu denen der ursprüngliche Quellcode nicht mehr vorliegt, insbesondere so genanntem Legacy-Code.

Gemäß einer vorteilhaften Ausgestaltung wird in dem optionalen Teilschritt S4.3 die Programmlogik PL in der Zwischensprache IL in Programmcode einer niedrigen Programmiersprache, insbesondere Assembler- oder Maschinencode, für eine Zielplattform TP übersetzt. Hierzu wird im Ausführungsbeispiel der x86-Codegenerator 12 verwendet, der die im Schritt S4.1 erzeugte hierarchische Darstellung 48 der Programmlogik PL parst und in Binär- oder Assemblercode 50 für einen x86-Prozessor umwandelt ohne etwaige Laufzeitbibliotheken, wie etwa für eine Bildschirmausgabe oder Zeiterfassung. Selbstverständlich können auch andere automatische Codeerzeugungsverfahren Anwendung finden. Eine derartige Übersetzung ermöglicht das effiziente Ausführen eines Computerprogramms 1 auf einer vorgegeben Zielplattform TP, wie einem x86-Prozessor.

Basierend auf einer Darstellung einer Programmlogik PL in der Zwischensprache IL, beispielsweise eines vollständigen Syntaxbaumes 60 der Programmlogik, ist es verhältnismäßig einfach, Binär- oder Assemblercode 50 für eine Zielplattform TP zu erstellen. Sofern keine Optimierung vorgenommen werden soll, kann der Binär- oder Assemblercode 50 direkt durch die einzelnen Elemente der hierarchische Darstellung 48 der Programmlogik PL in der Zwischensprache IL generiert werden. Der Binär- oder Assemblercode 50 kann beispielsweise durch rekursives Parsen des Syntaxbaumes 60 beginnend an seinem Wurzelelement ausgegeben werden.

Basierend auf so erzeugtem Assemblercode 50 kann, gegebenenfalls unter Einschluss von Standardbibliotheken oder weiteren Programmteilen komplett ablauffähiges Assemblerprogramm 51 für die Zielplattform TP erzeugt werden, das den Assemblercode 50 umfasst beziehungsweise inkludiert. Der Assemblercode 50 beziehungsweise das Assemblerprogramm 51 können dann mittels eines Assemblers 52 in an sich bekannter Weise in ausführbaren Code 53 für einen Intel x86-Prozessor umgewandelt werden.

Bevorzugt kann vor oder bei der Erzeugung des Assemblercodes 50 oder korrespondierenden Binärcodes eine weitere Optimierung für eine gegebene Zielplattform TP stattfinden. Im Ausführungsbeispiel kann beispielsweise ein Codeoptimierer 14 verwendet werden, um Assemblercode 50 zu erzeugen, der für eine Ausführung auf einer x86-Plattform optimiert ist.

Beispielsweise kann in der Darstellung der Zwischensprache IL die eigentliche Intention der in den einzelnen Programmkonstrukten verwendeten Parameter erkannt werden. Darauf basierend kann analysiert werden, ob die von dem ursprünglich verwendeten Compiler verwendeten Datenformate notwendig und für die beabsichtigte Zielplattform TP geeignet und optimal sind. Im beschriebenen Beispiel eines COBOL-Computerprogramms 1 verwendet der untersuchte COBOL-Compiler oftmals sogenannte BCD-Variablen zur Codierung etlicher Zahlenwerte. BCD-Variablen werden beispielsweise auch als Index zum Zugriff auf einzelne Werte eines Arrays verwendet, da die ursprüngliche S/390-Plattform einen sehr guten technischen Support für die Verarbeitung von BCD-Variablen bietet. Im Gegensatz dazu bietet die x86-Platform praktisch keine effiziente, direkte Unterstützung von BCD-Variablen. Ein Zugriff auf Einträge eines Arrays mittels eines Index in Form einer BCD-Variable ist somit eine verhältnismäßig aufwändige Operation, die aus technischer Sicht nicht erforderlich ist, da zulässige Werte für Indexvariablen grundsätzlich vorzeichenlose, ganze Zahlen sind, die sich verlustfrei als Binärzahl darstellen lassen. Zur Optimierung des ausgegebenen Assemblercodes 50 kann daher basierend auf den erkannten Konstrukten der Zwischensprache IL erkannt werden, dass es sich bei einer Variable um eine Indexvariable handelt, und dessen Datentyp gemäß den Anforderungen der Zielplattform TP geändert werden.

Konkret ersetzt das Rekompiliersystem 40 BCD-Variablen automatisch dann durch 64 Bit-lange Integer-Variablen, wenn der Wert der BCD-Variablen nicht mehr als 19 Dezimalstellen beträgt, keine SRP-Anweisung (Englisch: Shift and Round Packed BCD) zum Runden der BCD-Zahl darauf angewendet wird, die Variable zum Zugriff auf einen Arrayindex dient oder falls eine Datenflussanalyse ergibt, dass sie als Schleifen- oder Induktionsvariable verwendet wird. In den oben genannten Fällen ergibt sich durch den Ersatz des ursprünglich auf der Quellplattform SP verwendeten Datentyps durch einen anderen Datentyp für die Zielplattform TP kein Verlust an Genauigkeit. Anders ausgedrückt bleibt die Programmlogik PL gleich. Die ersatzweise verwendeten, 64 Bit-langen Integer-Variablen können durch einen x86-Prozessor aber sehr viel schneller verarbeitet werden.

Im Beispiel gemäß den Figuren 5B und 6 ist der S/390-spezifische Maschinencode zum Umformatieren der BCD-Variable für die Semantik der insgesamt durchgeführten Addition ohne Bedeutung und muss folglich nicht in entsprechenden Maschinencode einer Zielplattform TP abgebildet werden. Dementsprechend kann ein für die Zielplattform TP effizienter Maschinencode erzeugt werden. In der Figur 6 ist ein entsprechendes, automatisch erzeugtes x86-Assemblercodefragment 68 für das Beispiel gemäß Figur 5B angegeben.

Weitere mögliche Optimierungen betreffen die Unterscheidung von lokalen und globalen Variablen, das Aufrufen von Unterfunktionen, Prologe, Epiloge oder einzelne Abschnitten (auf Englisch "Sections" beziehungsweise "Buckets") von Prozeduren, bedingte Sprünge und das Laden von Basisregistern, die ohne Änderung der Programmlogik PL durch entsprechende Maschinenbefehle der Ziel-Plattform ZP ersetzt werden können.

### Bezugszeichenliste

- 1: Computerprogramm
- 2: S/390-Binärcode
- 3: JIT-Übersetzer
- 4: erster x86-Binärcode
- 5: Disassembler
- 6: (disassemblierter) Assemblercode
- 7: Übersetzungsprogramm
- 8: zweiter x86-Binärcode
- 9: Dekompiliervorrichtung
- 10: generischer Programmcode
- 11: Analyseprogramm
- 12: x86-Codegenerator
- 13: dritter x86-Binärcode
- 14: Codeoptimierer

- 30: Verfahren

- 40: Rekompiliersystem
- 41: Maschinencode
- 42: Bytestrom
- 43: Textdatei
- 44: Musterparser
- 45: Matcher
- 46: Token
- 47: LR-Parser
- 48: hierarchische Darstellung (der Programmlogik)

- 50: Assemblercode (für die Zielplattform)
- 51: lauffähiges Assemblerprogramm
- 52: Assembler
- 53: ausführbarer Code (für die Zielplattform)
- 60: Syntaxbaum
- 61: Zuweisungsausdruck
- 62: Additionsausdruck
- 63: Variablenzuweisung
- 64: weiterer Ausdruck
- 65: Konstante
- 66: Faktor
- 67: Variablenabruf
- 68: Assemblercodefragment

- L1: Binärcodeebene
- L2: Assemblercodeebene
- L3: Codeoptimierungsebene
- L4: Zwischensprachenebene
- L5: Hochsprachenebene

- CM: Codemuster
- IL: Zwischensprache
- SP: Quellplattform
- TP: Zielplattform
- PL: Programmlogik
- TS: Terminalsymbol
- NTS: Nichtterminalsymbol

## Patentansprüche

1. Verfahren (30) zum Erzeugen einer Darstellung einer Programmlogik (PL) in einer Zwischensprache (IL), umfassend:
- Erfassen (S1) von erstem Programmcode in der Form von Binärcode (2) oder Assemblercode (6) für eine erste Prozessorarchitektur, wobei der erste Programmcode eine Programmlogik (PL) implementiert und durch Kompilierung der in einer Hochsprache definierten Programmlogik (PL) mit einem Compiler erzeugt wurde, und ein Quellcode der in der Hochsprache definierten Programmlogik (PL) nicht vorliegt;
- Aufteilen (S2) des erfassten ersten Programmcodes in eine Sequenz von Codeabschnitten basierend auf einer vorbestimmten Menge von zumindest teilweise parametrisierten, für den Compiler spezifischen Codemustern (CM), wobei die Codeabschnitte des ersten Programmcode mittels Mustervergleich mit der vorbestimmten Menge von Codemustern (CM) verglichen werden, für jeden Codeabschnitt spezifische Parameterwerte für jeden Parameter eines korrespondierenden, parametrisierten Codemusters (CM) erfasst werden und jedem Codeabschnitt ein Terminalsymbol der Zwischensprache zugeordnet wird;
- Zuordnen (S3) der der Sequenz von Codeabschnitten zugeordneten Terminalsymbole (TS) zu Nichtterminalsymbolen (NTS) der Zwischensprache (IL) basierend auf einer kontextfreien Grammatik der Zwischensprache (IL), wobei eine Gesamtheit der zugeordneten Nichtterminalsymbole (NTS) die Programmlogik (PL) des ersten Programmcodes in der Zwischensprache (IL) beschreibt, wobei im Schritt des Zuordnens (S3) wenigstens eine kontextabhängige Bedingung für ein Nichtterminalsymbol der Zwischensprache basierend auf den im Schritt des Aufteilens (S2) erfassten Parameterwerten überprüft wird und eine mögliche Zuordnung zu dem Nichtterminalsymbol als unzutreffend verworfen wird, wenn die wenigstens eine kontextabhängige Bedingung durch die erfassten Parameterwerte der korrespondierenden Codeabschnitte nicht erfüllt wird, so dass eine Zuordnung eines korrespondierenden Terminalsymbols nur dann erfolgt, wenn für den untersuchten Codeabschnitt eine konsistente Zuordnung von Parameterwerten für jeden Parameter eines korrespondierenden parametrisierten Codemusters möglich ist; und
- Erzeugen (S4) einer von der ersten Prozessorarchitektur unabhängigen Darstellung der Programmlogik (PL) basierend auf den zugeordneten Nichtterminalsymbolen (NTS) der Zwischensprache (IL) und den erfassten Parameterwerten.

2. Verfahren (30) nach Anspruch 1, wobei im Schritt des Zuordnens (S3) eine der Sequenz von Codeabschnitten zugeordnete Sequenz von Terminalsymbolen (TS) durch einen Parser, insbesondere einen Bottom-Up-Parser, in eine hierarchische Darstellung (48) der Programmlogik (50) überführt wird, wobei übergeordnete Elemente der hierarchische Darstellung (48) den Nichtterminalsymbolen (NTS) der Zwischensprache (IL) entsprechen und ausschließlich untergeordnete Elemente der hierarchischen Darstellung (48) den Terminalsymbolen (TS) der Zwischensprache (IL) entsprechen.

3. Verfahren nach Anspruch 2, wobei die hierarchische Darstellung (48) eine Baumdarstellung ist, Blätter der Baumdarstellung erste Attribute aufweisen, in denen die im Schritt des Aufteilens (S2) erfassten Parameterwerte gespeichert werden, und Knoten der Baumdarstellung zweite Attribute aufweisen, in denen im Schritt des Zuordnens (S3) von den erfassten Parameterwerten abgeleitete Parameterwerte gespeichert werden.

4. Verfahren (30) nach einem der Ansprüche 1 bis 3, wobei im Schritt des Erzeugens (S4) zweiter Programmcode in Form von Binärcode für eine zweite Prozessorarchitektur, insbesondere x86-Binärcode (13) für einen x-86 Prozessor, basierend auf den zugeordneten Nichtterminalsymbolen (NTS) der Zwischensprache (IL) erzeugt wird, wobei bei einem Ausführen des zweiten Programmcodes auf einem Prozessor mit der zweiten Prozessorarchitektur Programmschritte gemäß der in der Hochsprache definierten Programmlogik (PL) ausgeführt werden.

5. Verfahren (30) nach Anspruch 4, wobei im Schritt des Erzeugens (S4) für die zweite Prozessorarchitektur, optimierter zweiter Programmcode erzeugt wird, wobei die Erzeugung von optimiertem zweiten Programmcode eine Analyse der von dem ersten Programmcode verwendeten Datentypen umfasst und wenigstens ein für die erste Prozessorarchitektur spezifischer erster Datentyp durch wenigstens einen zweiten Datentyp ersetzt wird.

6. Verfahren (30) nach einem der Ansprüche 1 bis 5, wobei
- der erste Programmcode von einem linear arbeitenden Compiler ohne Codeoptimierung erzeugt wurde; und/oder
- der erste Programmcode als S/360, S/370 oder S/390-Binärcode vorliegt.

7. Verfahren (30) nach einem der Ansprüche 1 bis 6, wobei
- die Zwischensprache (IL) eine abgeschlossene, kontextsensitive Sprache ist;
- die Nichtterminalsymbole (NTS) der Zwischensprache (IL) charakteristisch für eine Mehrzahl von imperativen, Hochsprachen sind, insbesondere COBOL, FORTRAN, S3, Algol und/oder C; und/oder
- die Zwischensprache (IL) Nichtterminalsymbole für folgende Programmkonstrukte einer Mehrzahl von imperativen Hochsprachen, insbesondere COBOL, FORTRAN, S3, Algol und/oder C, umfasst: Überprüfen einer Bedingung; Bedingte Ausführung eines Programmabschnitts; Auswerten eines arithmetischen Ausdrucks; Zuweisung eines Wertes zu einer Variable; Aufruf eines anderen Programmabschnitts; Aufrufen eines Unterprogramms; Rückkehr aus einem Unterprogramm; und Durchlaufen einer Programmschleife.

8. Verfahren (30) nach einem der Ansprüche 1 bis 7, wobei die vorbestimmten Menge von zumindest teilweise parametrisierten Codemustern (CM) wenigstens eines der folgenden Codemuster (CM) umfasst: Bestimmen einer Basisadresse; Speichern eines Parameters und/oder einer Parameterliste; Zugriff auf eine Array-Variable; Bestimmen eines Array-Indizes; Speichern eines übergebenen Parameterwerts; Packen, Entpacken, Formatieren, Anpassen, Addieren, Vergleichen oder Kopieren einer BCD-Variable; und Springen zu oder Zurückspringen aus einer Unterroutine.

9. Verfahren (30) nach einem der Ansprüche 1 bis 8, wobei die parametrisierten Codemuster wenigstens einen der folgenden Parameter umfassen: ein Basisregister; einen Offset-Wert; eine temporäre Adresse; eine Längenangabe, einen Bedingungscode; ein Register mit einer Adresse einer Variablen; und eine Sprungadresse.

10. Verfahren (30) nach einem der Ansprüche 1 bis 9, wobei die parametrisierten Codemuster (CM) durch Analyse eines Codeerzeugungsmoduls des Compilers ermittelt werden, das vom Compiler verwendeten Maschinencodesequenzen zur Umsetzung von bekannten atomaren Elementen einer Hochsprache als Codemuster (CM) zur Verfügung stellt.

11. Verfahren (30) nach einem der Ansprüche 1 bis 9, wobei die parametrisierten Codemuster (CM) durch Analyse von Computerprogrammen (1) ermittelt werden, zu denen sowohl der Quellcode in einer Hochsprache als auch kompilierter Code in Form von Assembler- oder Maschinencode vorliegen.

12. Dekompiliervorrichtung (9), umfassend:
- einen Matcher (45) zum Aufteilen von erfasstem erstem Programmcode in Form von Binärcode (2) oder Assemblercode (6) für einen Prozessor einer ersten Prozessorarchitektur mittels Mustervergleich in eine Sequenz von Codeabschnitten basierend auf einer vorbestimmten Menge von zumindest teilweise parametrisierten Codemustern (CM), wobei der erstem Programmcode eine Programmlogik (PL) implementiert und durch Kompilierung eines in einer Hochsprache definierten Computerprogramms (1) durch einen Compiler erzeugt wurde, ein Quellcode der in der Hochsprache definierten Programmlogik (PL) dem Matcher (45) nicht vorliegt, und der Matcher für jeden Codeabschnitt spezifische Parameterwerte für jeden Parameter eines korrespondierenden, parametrisierten Codemusters erfasst und jedem Codeabschnitt ein Terminalsymbol (TS) einer Zwischensprache (IL) zuordnet; und
- einen Parser, insbesondere einen Bottom-Up-Parser, zum Reduzieren einer der Sequenz von Codeabschnitten zugeordneten Sequenz von Terminalsymbole (TS) zu Nichtterminalsymbolen (NTS) der Zwischensprache (IL) basierend auf einer kontextfreien Grammatik der Zwischensprache (IL), wobei eine Gesamtheit der von dem Parser durch Reduzieren erzeugten Nichtterminalsymbole (NTS) die Programmlogik (PL) des Computerprogramms (1) in der Zwischensprache (IL) darstellt, wobei der Parser dazu eingerichtet ist, die Einhaltung wenigstens einer kontextabhängige Bedingung beim Reduzieren auf ein Nichtterminalsymbol zu prüfen und eine mögliche Reduzierung auf das Nichtterminalsymbol als unzutreffend zu verwerfen, wenn die wenigstens eine kontextabhängige Bedingung durch die erfassten Parameterwerte der korrespondierenden Codeabschnitte nicht erfüllt wird.

13. Dekompiliervorrichtung nach Anspruch 12, weiter umfassend einen Musterparser (44) zum Einlesen wenigstens einer Textdatei (43) mit darin enthaltenen Definitionen der vorbestimmten Menge von zumindest teilweise parametrisierten Codemustern (CM).

14. Rekompiliersystem, umfassend eine Dekompiliervorrichtung nach Anspruch 12 oder 13 und wenigstens eine Codeerzeugungsvorrichtung zum Übersetzen der in der Zwischensprache (IL) dargestellten Programmlogik in zu dem Computerprogramm (1) korrespondierenden Maschinencode für eine zweite Prozessorarchitektur.

15. Computerprogrammprodukt mit Programmcode zur Ausführung des in einem Speicher wenigstens eines Computersystems gespeichertem Programmcodes auf einem Prozessor des Computersystems, wobei der Programmcodes der Computerprogrammprodukts folgende Schritte ausführt:
- Aufteilen von erfasstem ersten Programmcode in der Form von Binärcode (2) oder Assemblercode (6) für einen Prozessor einer ersten Prozessorarchitektur mittels Mustervergleich in eine Sequenz von Codeabschnitten basierend auf einer vorbestimmten Menge von zumindest teilweise parametrisierten Codemustern, wobei der erste Programmcode eine Programmlogik (PL) implementiert und durch Kompilierung eines in einer Hochsprache definierten Computerprogramms (1) durch einen Compiler erzeugt wurde, ein Quellcode der in der Hochsprache definierten Programmlogik (PL) nicht vorliegt, und beim Aufteilen für jeden Codeabschnitt spezifische Parameterwerte für jeden Parameter eines korrespondierenden, parametrisierten Codemusters erfasst und jedem Codeabschnitt ein Terminalsymbol (TS) einer Zwischensprache (IL) zugeordnet werden; und
- Zuordnen der der aufgeteilten Sequenz von Codeabschnitten zugeordneten Terminalsymbole (TS) zu Nichtterminalsymbolen (NTS) der Zwischensprache (IL) basierend auf einer kontextfreien Grammatik der Zwischensprache (IL), wobei eine Gesamtheit der zugeordneten Nichtterminalsymbole (NTS) die Programmlogik (PL) des Computerprogramms (1) in der Zwischensprache (IL) darstellt,,
- wobei beim Zuordnen wenigstens eine kontextabhängige Bedingung für ein Nichtterminalsymbol der Zwischensprache basierend auf beim Aufteilen erfassten Parameterwerten überprüft wird, und eine mögliche Zuordnung zu dem Nichtterminalsymbol als unzutreffend verworfen wird, wenn die wenigstens eine kontextabhängige Bedingung durch die erfassten Parameterwerte der korrespondierenden Codeabschnitte nicht erfüllt wird, so dass eine Zuordnung eines korrespondierenden Terminalsymbols nur dann erfolgt, wenn für den untersuchten Codeabschnitt eine konsistente Zuordnung von Parameterwerten für jeden Parameter eines korrespondierenden parametrisierten Codemusters möglich ist.

## Claims

1. A method (30) for generating a representation of a program logic (PL) in an intermediate language (IL), comprising:
- acquiring (S1) first program code in the form of binary code (2) or assembly code (6) for a first processor architecture, wherein the first program code implements a program logic (PL) and was generated by compiling the program logic (PL) defined in a high-level language using a compiler, and a source code of the program logic (PL) defined in the high-level language is not available;
- splitting (S2) the captured first program code into a sequence of code segments based on a predetermined quantity of at least partially parameterized, compilerspecific code patterns (CM), wherein the code segments of the first program code are compared to the predetermined quantity of code patterns (CM) by means of pattern matching, specific parameter values for each parameter of a corresponding, parameterized code pattern (CM) are determined for each code segment, and a terminal symbol of the intermediate language is assigned to each code segment;
- assigning (S3) the terminal symbols (TS) associated with the sequence of code segments to non-terminal symbols (NTS) of the intermediate language (IL) based on a context-free grammar of the intermediate language (IL), wherein an entirety of the assigned non-terminal symbols (NTS) describes the program logic (PL) of the first program code in the intermediate language (IL), wherein, in the assigning step (S3), at least one context-dependent condition for a non-terminal symbol of the intermediate language is checked based on the parameter values captured in the splitting step (S2), and a possible assignment to the non-terminal symbol is rejected as invalid, if the at least one context-dependent condition is not satisfied by the detected parameter values of the corresponding code segments, such that an assignment of a corresponding terminal symbol occurs only if, for the examined code segment, a consistent assignment of parameter values is possible for each parameter of a corresponding parameterized code pattern; and
- generating (S4) a representation of the program logic (PL) that is independent of the first processor architecture, based on the assigned non-terminal symbols (NTS) of the intermediate language (IL) and the captured parameter values.

2. The method (30) according to claim 1, wherein, in the assigning step (S3), a sequence of terminal symbols (TS) associated with the sequence of code segments is converted by a parser, in particular a bottom-up parser, into a hierarchical representation (48) of the program logic (50), wherein parent elements of the hierarchical representation (48) correspond to the non-terminal symbols (NTS) of the intermediate language (IL), and only child elements of the hierarchical representation (48) correspond to the terminal symbols (TS) of the intermediate language (IL).

3. The method according to claim 2, where the hierarchical representation (48) is a tree representation, leaves of the tree representation have first attributes in which the parameter values recorded in the splitting step (S2) are stored, and nodes of the tree representation have second attributes in which parameter values derived from the recorded parameter values in the assigning step (S3) are stored.

4. The method (30) according to any one of claims 1 to 3, wherein, in the generation step (S4), second program code in the form of binary code for a second processor architecture, in particular, x86 binary code (13) for an x86 processor, is generated based on the assigned non-terminal symbols (NTS) of the intermediate language (IL), wherein, when the second program code is executed on a processor with the second processor architecture, program steps are executed in accordance with the program logic (PL) defined in the high-level language.

5. The method (30) according to claim 4, wherein, in the generating step (S4) for the second processor architecture, optimized second program code is generated, wherein the generation of optimized second program code comprises an analysis of the data types used by the first program code, and at least one first data type specific to the first processor architecture is replaced by at least one second data type.

6. The method (30) according to any one of claims 1 to 5, wherein
- the first program code was generated by a linear compiler without code optimization; and/or
- the first program code is in the form of S/360, S/370, or S/390 binary code.

7. The method (30) according to any one of claims 1 to 6, wherein
- the intermediate language (IL) is a well-defined, context-sensitive language;
- the non-terminal symbols (NTS) of the intermediate language (IL) are characteristic of a plurality of imperative high-level languages, in particular COBOL, FORTRAN, S3, Algol, and/or C; and/or
- the intermediate language (IL) comprises non-terminal symbols for the following program constructs of a plurality of imperative high-level languages, in particular COBOL, FORTRAN, S3, Algol, and/or C: checking a condition; conditional execution of a program section; evaluating an arithmetic expression; assigning a value to a variable; calling another program section; calling a subprogram; returning from a subprogram; and iterating through a program loop.

8. The method (30) according to any one of claims 1 to 7, wherein the predetermined quantity of at least partially parameterized code patterns (CM) comprises at least one of the following code patterns (CM): determining a base address; storing a parameter and/or a parameter list; accessing an array variable; determining an array index; storing a passed parameter value; packing, unpacking, formatting, adjusting, adding, comparing, or copying a BCD variable; and jumping to or returning from a subroutine.

9. The method (30) according to any one of claims 1 to 8, wherein the parameterized code patterns comprise at least one of the following parameters: a base register; an offset value; a temporary address; a length specification; a condition code; a register containing the address of a variable; and a jump address.

10. The method (30) according to any one of claims 1 to 9, wherein the parameterized code patterns (CM) are determined by analyzing a code generation module of the compiler, which provides machine code sequences used by the compiler to implement known atomic elements of a high-level language as code patterns (CM).

11. The method (30) according to any one of claims 1 to 9, wherein the parameterized code patterns (CM) are determined by analyzing computer programs (1) for which both the source code in a high-level language and compiled code in the form of assembly or machine code are available.

12. A decompilation device (9) comprising:
- a matcher (45) for dividing captured first program code in the form of binary code (2) or assembly code (6) for a processor of a first processor architecture, by means of pattern matching, into a sequence of code segments based on a predetermined quantity of at least partially parameterized code patterns (CM), wherein the first program code implements a program logic (PL) and was generated by a compiler through the compilation of a computer program (1) defined in a high-level language, and a source code of the program logic (PL) defined in the high-level language is not available to the matcher (45), and the matcher determines, for each code segment, specific parameter values for each parameter of a corresponding, parameterized code pattern and assigns to each code segment a terminal symbol (TS) of an intermediate language (IL); and
- a parser, in particular a bottom-up parser, for reducing a sequence of terminal symbols (TS) associated with the sequence of code segments to non-terminal symbols (NTS) of the intermediate language (IL) based on a context-free grammar of the intermediate language (IL), wherein an entirety of non-terminal symbols (NTS) generated by the parser through reduction represents the program logic (PL) of the computer program (1) in the intermediate language (IL), wherein the parser is configured to check compliance with at least one context-dependent condition when reducing to a non-terminal symbol and to reject a possible reduction to that non-terminal symbol as invalid if the at least one context-dependent condition is not satisfied by the captured parameter values of the corresponding code segments.

13. The decompilation device according to claim 12, further comprising a pattern parser (44) for reading at least one text file (43) containing definitions of the predetermined quantity of at least partially parameterized code patterns (CM).

14. A recompilation system comprising a decompilation device according to claim 12 or 13 and at least one code generation device for translating the program logic represented in the intermediate language (IL) into machine code corresponding to the computer program (1) for a second processor architecture.

15. A computer program product comprising program code for executing the program code stored in a memory of at least one computer system on a processor of the computer system, wherein the program code of the computer program product performs the following steps:
- splitting captured first program code in the form of binary code (2) or assembly code (6) for a processor of a first processor architecture into a sequence of code segments based on a predetermined quantity of at least partially parameterized code patterns by means of pattern matching, wherein the first program code implements a program logic (PL) and was generated by a compiler through the compilation of a computer program (1) defined in a high-level language, no source code of the program logic (PL) defined in the high-level language is available, and during the splitting, specific parameter values for each parameter of a corresponding, parameterized code pattern are determined for each code segment, and a terminal symbol (TS) of an intermediate language (IL) is assigned to each code segment; and
- assigning the terminal symbols (TS) associated with the partitioned sequence of code segments to non-terminal symbols (NTS) of the intermediate language (IL) based on a context-free grammar of the intermediate language (IL), wherein an entirety of the assigned non-terminal symbols (NTS) represents the program logic (PL) of the computer program (1) in the intermediate language (IL),
- wherein, during the assignment, at least one context-dependent condition for a non-terminal symbol of the intermediate language is checked based on parameter values recorded during the splitting, and a possible assignment to the non-terminal symbol is rejected as invalid if the at least one context-dependent condition is not satisfied by the captured parameter values of the corresponding code sections, such that an assignment of a corresponding terminal symbol occurs only if, for the examined code section, a consistent assignment of parameter values is possible for each parameter of a corresponding parameterized code pattern.

## Revendications

1. Procédé (30) pour générer une représentation d'une logique de programme (PL) dans un langage intermédiaire (IL), comprenant :
- la collection (S1) d'un premier code de programme sous la forme d'un code binaire (2) ou de code assembleur (6) pour une première architecture de processeur, le premier code de programme mettant en œuvre une logique de programme (PL) et ayant été généré par compilation de la logique de programme (PL) définie en langage haut avec un compilateur, et qu'il n'existe pas de code source de la logique de programme (PL) définie en langage haut ;
- diviser (S2) le premier code de programme enregistré en une séquence de segments de code sur la base d'un ensemble prédéterminé de modèles de code (CM) au moins partiellement paramétrés et spécifiques au compilateur, les segments de code du premier code de programme étant comparés à l'ensemble prédéterminé de modèles de code (CM) au moyen d'une comparaison de modèles, des valeurs de paramètres spécifiques sont enregistrées pour chaque paramètre d'un modèle de code paramétré correspondant (CM) pour chaque segment de code, et un symbole terminal du langage intermédiaire est attribué à chaque segment de code ;
- associer (S3) des symboles terminaux (TS) associés à la séquence de segments de code à des symboles non terminaux (NTS) du langage intermédiaire (IL) sur la base d'une grammaire sans contexte du langage intermédiaire (IL), l'ensemble des symboles non terminaux (NTS) affectés décrivant la logique du programme (PL) du premier code de programme dans le langage intermédiaire (IL), une ou plusieurs conditions dépendantes du contexte pour un symbole non terminal du langage intermédiaire étant vérifiées lors de l'étape d'association (S3) sur la base des valeurs de paramètres enregistrées lors de l'étape de division (S2), et une affectation éventuelle à ce symbole non terminal étant rejetée comme non valable, si la au moins une condition dépendante du contexte n'est pas satisfaite par les valeurs de paramètres enregistrées des segments de code correspondants, de sorte qu'une attribution d'un symbole terminal correspondant n'a lieu que si, pour le segment de code examiné, une attribution cohérente de valeurs de paramètres est possible pour chaque paramètre d'un modèle de code paramétré correspondant ; et
- générer (S4) une représentation de la logique du programme (PL) indépendante de la première architecture de processeur, sur la base des symboles non terminaux (NTS) attribués du langage intermédiaire (IL) et des valeurs de paramètres enregistrées.

2. Procédé (30) selon la revendication 1, dans lequel, lors de l'étape d'association (S3), une séquence de symboles terminaux (TS) associée à la séquence de segments de code est convertie par un analyseur syntaxique, en particulier un analyseur syntaxique ascendant, est convertie en une représentation hiérarchique (48) de la logique du programme (50), les éléments de niveau supérieur de la représentation hiérarchique (48) correspondant aux symboles non terminaux (NTS) du langage intermédiaire (IL) et les éléments de niveau inférieur de la représentation hiérarchique (48) correspondant exclusivement aux symboles terminaux (TS) du langage intermédiaire (IL).

3. Procédé selon la revendication 2, dans lequel la représentation hiérarchique (48) est une représentation arborescente, les feuilles de la représentation arborescente comportent des premiers attributs dans lesquels sont stockées les valeurs de paramètres enregistrées lors de l'étape de division (S2), et les nœuds de la représentation arborescente comportent des seconds attributs dans lesquels sont stockées les valeurs de paramètres dérivées des valeurs de paramètres enregistrées lors de l'étape d'association (S3).

4. Procédé (30) selon l'une des revendications 1 à 3, dans lequel, lors de l'étape de génération (S4), un deuxième code de programme sous forme de code binaire pour une deuxième architecture de processeur, en particulier un code binaire x86 (13) pour un processeur x86, est généré sur la base des symboles non terminaux (NTS) associés du langage intermédiaire (IL), de sorte que, lors de l'exécution du deuxième code de programme sur un processeur doté de la deuxième architecture de processeur, des étapes de programme sont exécutées conformément à la logique de programme (PL) définie dans le langage haut.

5. Procédé (30) selon la revendication 4, dans lequel, lors de l'étape de génération (S4) pour la deuxième architecture de processeur, un deuxième code de programme optimisé est généré, la génération du deuxième code de programme optimisé comprenant une analyse des types de données utilisés par le premier code de programme et le remplacement d'au moins un premier type de données spécifique à la première architecture de processeur par au moins un deuxième type de données.

6. Procédé (30) selon l'une des revendications 1 à 5, dans lequel
- le premier code de programme a été généré par un compilateur fonctionnant de manière linéaire sans optimisation du code ; et/ou
- le premier code de programme se présente sous la forme d'un code binaire S/360, S/370 ou S/390.

7. Procédé (30) selon l'une des revendications 1 à 6, dans lequel
- le langage intermédiaire (IL) est un langage complet et sensible au contexte ;
- les symboles non terminaux (NTS) du langage intermédiaire (IL) sont caractéristiques d'une pluralité de langages hauts impératifs, notamment COBOL, FORTRAN, S3, Algol et/ou C ; et/ou
- le langage intermédiaire (IL) comprend des symboles non terminaux correspondant aux constructions de programme suivantes d'une pluralité de langages haut impératifs, notamment COBOL, FORTRAN, S3, Algol et/ou C : vérification d'une condition; exécution conditionnelle d'une section de programme; évaluation d'une expression arithmétique; l'affectation d'une valeur à une variable; l'appel d'une autre section de programme; l'appel d'un sous-programme; le retour d'un sous-programme; et l'exécution d'une boucle de programme.

8. Procédé (30) selon l'une des revendications 1 à 7, dans lequel l'ensemble prédéterminé de modèles de code (CM) au moins partiellement paramétrés comprend au moins l'un des modèles de code (CM) suivants : la détermination d'une adresse de base; le stockage d'un paramètre et/ou d'une liste de paramètres; l'accès à une variable de tableau; la détermination d'un index de tableau; le stockage d'une valeur de paramètre transmise; compresser, décompresser, formater, ajuster, additionner, comparer ou copier une variable BCD; et passer à une sous-routine ou en sortir.

9. Procédé (30) selon l'une des revendications 1 à 8, dans lequel les modèles de code paramétrés comprennent au moins l'un des paramètres suivants : un registre de base; une valeur de décalage; une adresse temporaire; une indication de longueur, un code de condition; un registre contenant l'adresse d'une variable; et une adresse de saut.

10. Procédé (30) selon l'une des revendications 1 à 9, dans lequel les modèles de code paramétrés (CM) sont déterminés par l'analyse d'un module de génération de code du compilateur, qui met à disposition, en tant que modèles de code (CM), des séquences de code machine utilisées par le compilateur pour la conversion d'éléments atomiques connus d'un langage haut.

11. Procédé (30) selon l'une des revendications 1 à 9, dans lequel les modèles de code paramétrés (CM) sont déterminés par l'analyse de programmes informatiques (1) pour lesquels on dispose à la fois du code source dans un langage de haut niveau et du code compilé sous forme de code assembleur ou de code machine.

12. Dispositif de décompilation (9), comprenant :
- un module de correspondance (45) destiné à diviser un premier code de programme capturé, sous forme de code binaire (2) ou de code assembleur (6) pour un processeur d'une première architecture de processeur, au moyen d'une comparaison de motifs, en une séquence de segments de code sur la base d'un ensemble prédéterminé de motifs de code au moins partiellement paramétrés (CM), le premier code de programme mettant en œuvre une logique de programme (PL) et ayant été généré par la compilation, par un compilateur, d'un programme informatique (1) défini dans un langage haut, aucun code source de la logique de programme (PL) définie dans le langage haut n'étant disponible pour le dispositif de correspondance (45), et le comparateur enregistre, pour chaque segment de code, des valeurs de paramètres spécifiques pour chaque paramètre d'un modèle de code paramétré correspondant, et attribue à chaque segment de code un symbole terminal (TS) d'un langage intermédiaire (IL) ; et
- un analyseur syntaxique, en particulier un analyseur ascendant, destiné à réduire une séquence de symboles terminaux (TS) associée à la séquence de segments de code en symboles non terminaux (NTS) du langage intermédiaire (IL) sur la base d'une grammaire sans contexte du langage intermédiaire (IL), l'ensemble des symboles non terminaux (NTS) générés par l'analyseur par réduction représentant la logique du programme (PL) du programme informatique (1) dans le langage intermédiaire (IL), l'analyseur syntaxique étant agencé pour vérifier le respect d'au moins une condition contextuelle lors de la réduction à un symbole non terminal et pour rejeter une réduction éventuelle à ce symbole non terminal comme non valable si ladite au moins une condition contextuelle n'est pas satisfaite par les valeurs des paramètres détectés dans les segments de code correspondants.

13. Dispositif de décompilation selon la revendication 12, comprenant en outre un analyseur de modèles (44) destiné à lire au moins un fichier texte (43) contenant des définitions de l'ensemble prédéterminé de modèles de code (CM) au moins partiellement paramétrés.

14. Système de recompilation comprenant un dispositif de décompilation selon la revendication 12 ou 13 et au moins un dispositif de génération de code destiné à traduire la logique du programme représentée dans le langage intermédiaire (IL) en code machine correspondant au programme informatique (1) pour une deuxième architecture de processeur.

15. Produit de programme informatique comprenant un code de programme destiné à l'exécution, sur un processeur du système informatique, du code de programme stocké dans une mémoire d'au moins un système informatique, le code de programme du produit de programme informatique exécutant les étapes suivantes :
- diviser d'un premier code de programme enregistré sous forme de code binaire (2) ou de code assembleur (6) pour un processeur d'une première architecture de processeur, au moyen d'une comparaison de modèles, en une séquence de segments de code basée sur un ensemble prédéterminé de modèles de code au moins partiellement paramétrés, le premier code de programme mettant en œuvre une logique de programme (PL) et ayant été généré par la compilation, par un compilateur, d'un programme informatique (1) défini dans un langage haut, aucun code source de la logique de programme (PL) définie en langage haut n'étant disponible, et lors de la division, des valeurs de paramètres spécifiques à chaque segment de code étant enregistrées pour chaque paramètre d'un modèle de code paramétré correspondant, et un symbole terminal (TS) d'un langage intermédiaire (IL) étant attribué à chaque segment de code ; et
- l'affectation des symboles terminaux (TS) associés à la séquence segmentée de sections de code à des symboles non terminaux (NTS) du langage intermédiaire (IL) sur la base d'une grammaire sans contexte du langage intermédiaire (IL), l'ensemble des symboles non terminaux (NTS) attribués représentant la logique de programme (PL) du programme informatique (1) dans le langage intermédiaire (IL),
- dans lequel, lors de l'affectation, au moins une condition dépendante du contexte pour un symbole non terminal du langage intermédiaire est vérifiée sur la base de valeurs de paramètres enregistrées lors de la division, et qu'une attribution possible au symbole non terminal est rejetée comme non valable si la au moins une condition dépendante du contexte n'est pas satisfaite par les valeurs de paramètres enregistrées des segments de code correspondants, de sorte qu'une attribution d'un symbole terminal correspondant n'a lieu que si, pour le segment de code examiné, une attribution cohérente de valeurs de paramètres est possible pour chaque paramètre d'un modèle de code paramétré correspondant.
